# EUROPEAN PATENT APPLICATION

(11) **EP 4 838 916 A1**
(43) Date of publication of application: **11.11.2026**
(21) Application number: 25738410.7
(22) Date of filing: 07.01.2025
(51) Int. Cl.: H04W 8/02

(54) **COMMUNICATION METHOD AND APPARATUS FOR NTN, TERMINAL, AND NETWORK-SIDE DEVICE**

(30) Priority: 12.01.2024 CN 202410049608
(71) Applicant: Vivo Mobile Communication Co., Ltd., Dongguan, Guangdong 523863 (CN)
(72) Inventor: WANG, Wen, Dongguan, Guangdong 523863 (CN); ZHANG, Yanxia, Dongguan, Guangdong 523863 (CN)
(74) Representative: Murgitroyd & Company
(86) International application number: PCT/CN2025/071072
(87) International publication number: WO 2025/148880

(57) **Abstract**

This application discloses an NTN communication method and apparatus, a terminal, and a network-side device, belonging to the technical field of communications. The NTN communication method according to embodiments of this application includes: acquiring, by a terminal, first information, where the first information includes at least one of the following: a network supporting a satellite communication-based store-and-forward communication mode; and the network performing the satellite communication-based store-and-forward communication mode; and performing, by the terminal, a first operation in the satellite communication-based store-and-forward communication mode according to the first information, the first operation including an attach operation or a registration operation.

## Description

### CROSS-REFERENCE TO RELATED APPLICATION

This application claims priority to Chinese Patent Application No. 202410049608.7 filed on January 12, 2024, which is incorporated herein by reference in its entirety.

### TECHNICAL FIELD

This application belongs to the technical field of communications, and specifically relates to a non-terrestrial network (Non-Terrestrial Network, NTN) communication method and apparatus, a terminal, and a network-side device.

### BACKGROUND

In some related technologies, attach and registration procedures of a terminal are generally performed based on a terrestrial network, and a prerequisite for the attach and registration procedures is that a link between the terminal and a network side is always available. As a result, the attach and registration procedures of the terminal support only the terrestrial network, leading to poor communication performance of the terminal.

### SUMMARY

Embodiments of this application provide an NTN communication method and apparatus, a terminal, and a network-side device, which can resolve the problem of poor communication performance of the terminal.

According to a first aspect, an NTN communication method is provided, including:
acquiring, by a terminal, first information, where the first information includes at least one of the following: a network supporting a satellite communication-based store-and-forward communication mode; and the network performing the satellite communication-based store-and-forward communication mode; and
performing, by the terminal, a first operation in the satellite communication-based store-and-forward communication mode according to the first information, the first operation including an attach operation or a registration operation.

According to a second aspect, an NTN communication method is provided, including:
acquiring, by a first core network element, third information; and
performing, by the first core network element, an attach operation or a registration operation in a satellite communication-based store-and-forward communication mode according to the third information.

According to a third aspect, an NTN communication method is provided, including:
acquiring, by an access network device, fourth information; and
performing, by the access network device, an attach operation or a registration operation in a satellite communication-based store-and-forward communication mode according to the fourth information;
where the fourth information includes at least one of the following:
   second indication information, the second indication information being used for indicating that a terminal uses the satellite communication-based store-and-forward communication mode; and
   second local configuration information, the second local configuration information indicating that the access network device is in the satellite communication-based store-and-forward communication mode.

According to a fourth aspect, an NTN communication apparatus is provided, including:
an acquisition module, configured to acquire first information, where the first information includes at least one of the following: a network supporting a satellite communication-based store-and-forward communication mode; and the network performing the satellite communication-based store-and-forward communication mode; and
an execution module, configured to perform a first operation in the satellite communication-based store-and-forward communication mode according to the first information, the first operation including an attach operation or a registration operation.

According to a fifth aspect, an NTN communication apparatus is provided, including:
an acquisition module, configured to acquire third information; and
an execution module, configured to perform an attach operation or a registration operation in the satellite communication-based store-and-forward communication mode according to the third information.

According to a sixth aspect, an NTN communication apparatus is provided, including:
an acquisition module, configured to acquire fourth information; and
an execution module, configured to perform an attach operation or a registration operation in the satellite communication-based store-and-forward communication mode according to the fourth information;
where the fourth information includes at least one of the following:
   second indication information, the second indication information being used for indicating that a terminal uses the satellite communication-based store-and-forward communication mode; and
   second local configuration information, the second local configuration information indicating that the access network device is in the satellite communication-based store-and-forward communication mode.

According to a seventh aspect, a terminal is provided. The terminal includes a processor and a memory. The memory stores a program or an instruction executable on the processor. When the program or the instruction is executed by the processor, steps of the method as described in the first aspect are implemented.

According to an eighth aspect, a terminal is provided, including a processor and a communication interface. The communication interface is configured to acquire first information, where the first information includes at least one of the following: a network supporting a satellite communication-based store-and-forward communication mode; and the network performing the satellite communication-based store-and-forward communication mode; and perform a first operation in the satellite communication-based store-and-forward communication mode according to the first information, the first operation including an attach operation or a registration operation.

According to a ninth aspect, a network-side device is provided. The network-side device includes a processor and a memory. The memory stores a program or an instruction executable on the processor. When the program or the instruction is executed by the processor, steps of the method as described in the second aspect are implemented, or when the program or the instruction is executed by the processor, steps of the method as described in the third aspect are implemented.

According to a tenth aspect, a network-side device is provided, including a processor and a communication interface. The communication interface is configured to acquire third information. The communication interface or the processor is configured to perform an attach operation or a registration operation in the satellite communication-based store-and-forward communication mode according to the third information. Alternatively, the communication interface is configured to: acquire fourth information; and perform an attach operation or a registration operation in the satellite communication-based store-and-forward communication mode according to the fourth information. The fourth information includes at least one of the following: second indication information, the second indication information being used for indicating that a terminal uses the satellite communication-based store-and-forward communication mode; and second local configuration information, the second local configuration information indicating that the access network device is in the satellite communication-based store-and-forward communication mode.

According to an eleventh aspect, a readable storage medium is provided. The readable storage medium stores a program or an instruction. When the program or the instruction is executed by a processor, steps of the method as described in the first aspect are implemented, or steps of the method as described in the second aspect are implemented, or steps of the method as described in the third aspect are implemented.

According to a twelfth aspect, a wireless communication system is provided, including a terminal, an access network device, and a first core network element. The terminal may be configured to implement steps of the method as described in the first aspect. The first core network element may be configured to implement steps of the method as described in the second aspect. The access network device may be configured to implement steps of the method as described in the third aspect.

According to a thirteenth aspect, a chip is provided. The chip includes a processor and a communication interface. The communication interface is coupled to the processor, and the processor is configured to run a program or an instruction to implement the method as described in the first aspect, or implement the method as described in the second aspect, or implement the method as described in the third aspect.

According to a fourteenth aspect, a computer program/program product is provided. The computer program/program product is stored in a storage medium. The program/program product is executed by at least one processor to implement steps of the method as described in the first aspect, or the program/program product is executed by at least one processor to implement steps of the method as described in the second aspect, or the program/program product is executed by at least one processor to implement steps of the method as described in the third aspect.

In embodiments of this application, a terminal acquires first information, where the first information includes at least one of the following: a network supporting a satellite communication-based store-and-forward communication mode; and the network performing the satellite communication-based store-and-forward communication mode. The terminal performs a first operation in the satellite communication-based store-and-forward communication mode according to the first information. The first operation includes an attach operation or a registration operation. In this way, the terminal may perform the first operation in the satellite communication-based store-and-forward communication mode according to the first information. The first operation includes an attach operation or a registration operation. Therefore, the terminal can support attach or registration in an NTN, thereby improving communication performance of the terminal.

### BRIEF DESCRIPTION OF THE DRAWINGS

FIG. 1 is a block diagram of a wireless communication system to which an embodiment of this application is applicable;
FIG. 2 is a schematic diagram of a wireless communication system according to an embodiment of this application;
FIG. 3 is a schematic diagram of another wireless communication system according to an embodiment of this application;
FIG. 4 is a flowchart of an NTN communication method according to an embodiment of this application;
FIG. 5 is a flowchart of another communication method for an NTN according to an embodiment of this application;
FIG. 6 is a flowchart of another communication method for an NTN according to an embodiment of this application;
FIG. 7 is a schematic diagram of NTN communication according to an embodiment of this application;
FIG. 8 is a schematic diagram of another NTN communication according to an embodiment of this application;
FIG. 9 is a schematic diagram of another NTN communication according to an embodiment of this application;
FIG. 10 is a schematic diagram of another NTN communication according to an embodiment of this application;
FIG. 11 is a schematic diagram of another NTN communication according to an embodiment of this application;
FIG. 12a is a schematic diagram of another NTN communication according to an embodiment of this application;
FIG. 12b is a schematic diagram of another NTN communication according to an embodiment of this application;
FIG. 13 is a structural diagram of an NTN communication apparatus according to an embodiment of this application;
FIG. 14 is a structural diagram of another communication apparatus for an NTN according to an embodiment of this application;
FIG. 15 is a structural diagram of another communication apparatus for an NTN according to an embodiment of this application;
FIG. 16 is a structural diagram of a communication device according to an embodiment of this application;
FIG. 17 is a structural diagram of a device according to an embodiment of this application;
FIG. 18 is a structural diagram of another device according to an embodiment of this application; and
FIG. 19 is a structural diagram of another device according to an embodiment of this application.

### DETAILED DESCRIPTION

Technical solutions in embodiments of this application are clearly described below with reference to the accompanying drawings in the embodiments of this application. Apparently, the described embodiments are some rather than all of the embodiments of this application. All other embodiments obtained by a person of ordinary skill in the art based on the embodiments of this application all fall within the scope of protection of this application.

The terms "first", "second", and the like in this application are used to distinguish similar objects, but are not used to describe a specific order or sequence. It should be understood that terms used in this way are interchangeable in appropriate circumstances, so that the embodiments of this application can be implemented in other orders than the order illustrated or described herein. In addition, objects distinguished by "first" and "second" are generally objects of one class, and a quantity of objects is not limited. For example, one or more first objects may be provided. In addition, the term "or" in this application denotes at least one of the connected objects. For example, "A or B" covers three solutions, that is, Solution I: including A and excluding B; Solution II: including B and excluding A; and Solution III: including both A and B. The character "/" generally indicates an "or" relationship between the associated objects before and after it.

In this application, the term "indication" may be a direct indication (or referred to as an explicit indication) or an indirect indication (or referred to as an implicit indication). The direct indication may be understood as that a sending party explicitly notifies a receiving party of content such as specific information, an operation that needs to be performed, or a request result in the sent indication. The indirect indication may be understood as that the receiving party determines corresponding information according to an indication sent by the sending party, or performs determination and determines an operation that needs to be performed or a request result according to a determination result.

It should be noted that the technologies described in the embodiments of this application are not limited to a long term evolution (Long Term Evolution, LTE)/LTE-advanced (LTE-Advanced, LTE-A) system, and may also be used in another wireless communication system, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or another system. The terms "system" and "network" in the embodiments of this application are often used interchangeably, and the described technologies can be applied to the systems and radio technologies mentioned above, and can also be applied to other systems and radio technologies. A new radio (New Radio, NR) system is described in the following descriptions for the purpose of exemplification, and the NR terms are used in most of the following descriptions, but the technologies may also be applied to systems other than the NR system, such as a 6^{th} Generation (6^{th} Generation, 6G) communication system.

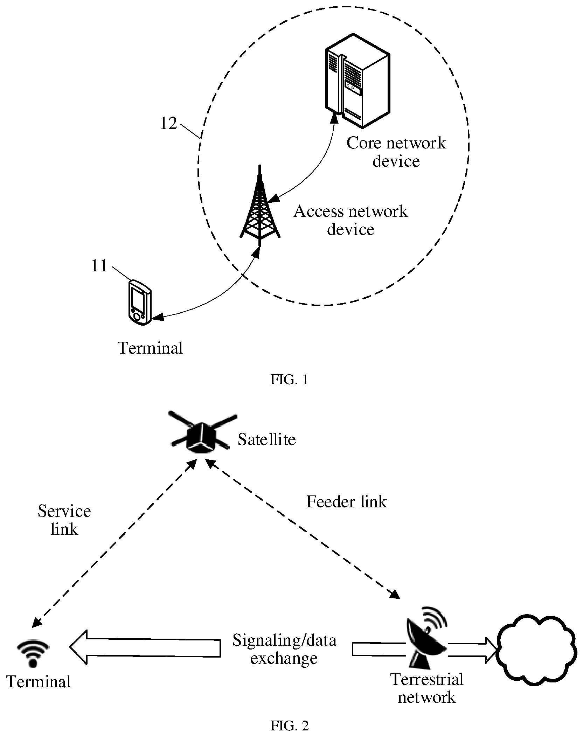

FIG. 1 is a block diagram of a wireless communication system to which an embodiment of this application is applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR) or virtual reality (Virtual Reality, VR) device, a robot, a wearable device (Wearable Device), a flight vehicle (flight vehicle), a vehicle user equipment (Vehicle User Equipment, VUE), a ship-borne device, a pedestrian user equipment (Pedestrian User Equipment, PUE), a smart home appliance (a home device having a wireless communication function, such as a refrigerator, a television, a washing machine, or furniture), a game machine, a personal computer (Personal Computer, PC), a teller machine, or a self-service machine. The wearable device includes a smart watch, a smart band, a smart earphone, smart glasses, smart jewelry (a smart bracelet, a smart chain, a smart ring, a smart necklace, a smart anklet, a smart ankle chain, or the like), a smart wristband, smart clothing, or the like. The vehicle user equipment may also be referred to as a vehicle-mounted terminal, a vehicle-mounted controller, a vehicle-mounted module, a vehicle-mounted component, a vehicle-mounted chip, a vehicle-mounted unit, or the like. It should be noted that the specific type of the terminal 11 is not limited in this embodiment of this application.

The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a Wireless Fidelity (Wireless Fidelity, WiFi) node, or the like. The base station may be referred to as a node B (Node B, NB), an evolved node B (Evolved Node B, eNB), a next generation node B (the next generation Node B, gNB), a new radio node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home node B (home Node B, HNB), a home evolved node B (home evolved Node B), a transmission reception point (Transmission Reception Point, TRP), an on-board access network device, an on-board centralized unit (Centralized Unit, CU) of an access network device, a CU of an on-board access network device, or another appropriate term in the field. Provided that a same technical effect is achieved, the base station is not limited to specific technical terms. It should be noted that, in this embodiment of this application, a base station in an NR system is merely used as an example, and a specific type of the base station is not limited.

The core network device is also referred to as a core network element, and may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a serving gateway (Serving Gate Way, SGW), a PDN gateway (PDN Gate Way, PGW), a policy and charging rules function (Policy and Charging Rules Function, PCRF), an edge application server discovery function (Edge Application Server Discovery Function, EASDF), unified data management (Unified Data Management, UDM), unified data repository (Unified Data Repository, UDR), a home subscriber server (Home Subscriber Server, HSS), a centralized network configuration (Centralized Network Configuration, CNC), a network repository function (Network Repository Function, NRF), a network exposure function (Network Exposure Function, NEF), a local NEF (local NEF or L-NEF), a binding support function (Binding Support Function, BSF), an Application Function (application function, AF), and the like. It should be noted that in this embodiment of this application, only a core network device in the NR system is used as an example for description, and a specific type of the core network device is not limited.

In an NTN communication system, to implement data or signaling exchange between a terminal and a terrestrial network, there is a need to ensure that a service link (that is, a link between a terminal and a satellite in FIG. 2) and a feeder link (a link between the satellite and a ground station in FIG. 2) can remain connected at the same time.

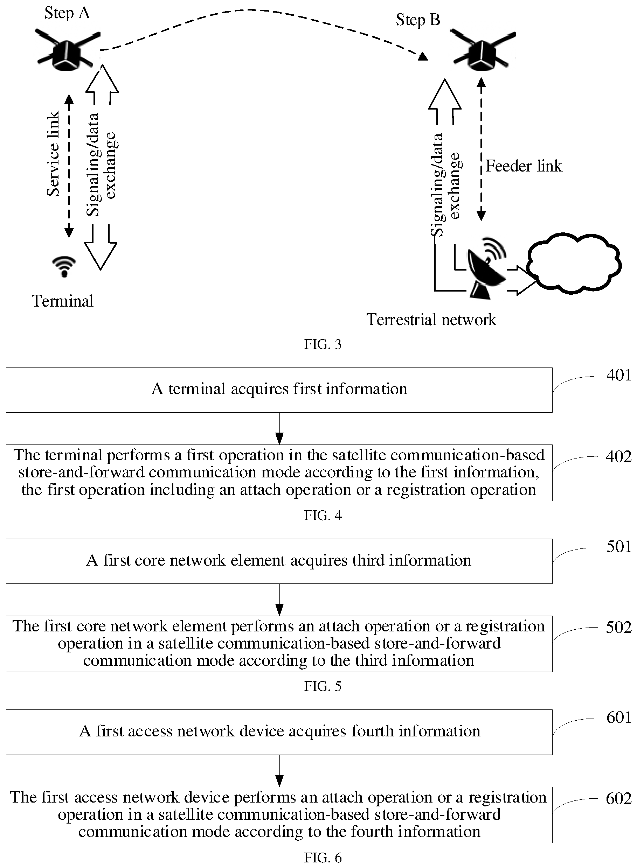

In some cases, for example, in an early stage of deployment of a satellite network, it cannot be ensured that the service link and the feeder link can remain connected at the same time. To support data transmission (e.g., delay-tolerant service data), an embodiment of this application provides a store-and-forward communication (Store and forward communication, S&F) mode, as shown in FIG. 3. Taking uplink data transmission as an example, when having uplink data to transmit, the terminal may first transmit the uplink data to the satellite by using the service link (as shown in step A), and the satellite stores related data (or a network device on the satellite stores the related data). When moving to a position where the feeder link is available, the satellite forwards the stored data to the terrestrial network (as shown in step B). Similarly, when there is downlink data to be transmitted to the terminal, the terrestrial network first transmits the data to the satellite, and the satellite stores related downlink data. When moving to a position where the service link is available, the satellite forwards the stored data to the terminal.

With reference to the accompanying drawings, the following provides detailed descriptions of an NTN communication method and apparatus, a terminal, and a network-side device provided in embodiments of this application by using some embodiments and application scenarios thereof.

Referring to FIG. 4, FIG. 4 is a flowchart of an NTN communication method according to an embodiment of this application, which, as shown in FIG. 4, includes the following steps:
Step 401: A terminal acquires first information, where the first information includes at least one of the following: a network supporting a satellite communication-based store-and-forward communication mode; and the network performing the satellite communication-based store-and-forward communication mode.

The acquiring, by a terminal, first information may be acquiring, by the terminal, the first information delivered by a network-side device. In some implementations, the first information may alternatively be generated by the terminal. For example, the terminal determines, based on acquired or pre-configured information, that the network supports the satellite communication-based store-and-forward communication mode or the network performs the satellite communication-based store-and-forward communication mode.

Step 402: The terminal performs a first operation in the satellite communication-based store-and-forward communication mode according to the first information, the first operation including an attach operation or a registration operation.

The performing a first operation in the satellite communication-based store-and-forward communication mode according to the first information may be: determining, according to the first information, that the network supports the satellite communication-based store-and-forward communication mode or the network performs the satellite communication-based store-and-forward communication mode, and then performing the first operation of the satellite communication-based store-and-forward communication mode.

The foregoing attach operation may be an attach request operation, specifically an attach request operation in the satellite communication-based store-and-forward communication mode. The foregoing registration operation may be a registration operation, specifically a registration request operation in the satellite communication-based store-and-forward communication mode.

In this embodiment of this application, by using the above steps, the attach operation or registration operation of the satellite communication-based store-and-forward communication mode can be performed according to the first information, thereby supporting attach or registration in an NTN and further improving communication performance of the terminal.

As an optional implementation, the attach operation includes:
transmitting a first-type attach request message, attach of the first-type attach request message being of an attach type of the satellite communication-based store-and-forward communication mode; and
the registration operation includes:
   transmitting a first-type registration request message, registration of the first-type registration request message being of a registration type of the satellite communication-based store-and-forward communication mode.

The foregoing first-type attach request message may be that an attach request indicated by the attach request message is an attach request of the satellite communication-based store-and-forward communication mode.

The foregoing first-type registration request message may be that a registration request indicated by the registration request message is a registration request of the satellite communication-based store-and-forward communication mode.

In this implementation, since the first-type attach request message is transmitted, in this way, attach in the satellite communication-based store-and-forward communication mode can be supported, thereby achieving better attach performance in the NTN. Since a first-type request message is transmitted, in this way, requesting in the satellite communication-based store-and-forward communication mode can be supported, thereby achieving better requesting performance in the NTN.

As an optional implementation, the first operation further includes:
transmitting first indication information; and
transmitting the second indication information;
where the first indication information is carried in the attach request message or registration request message, and the first indication information is used for indicating at least one of the following:
   indicating use of the satellite communication-based store-and-forward communication mode; and
   indicating a capability of supporting the satellite communication-based store-and-forward communication mode.

The second indication information is carried in a radio resource control (Radio Resource Control, RRC) message transmitted to a RAN, and indicates that the terminal uses the satellite communication-based store-and-forward communication mode.

The foregoing first indication information may be a first S&F indication, and the foregoing second indication information may be a second S&F indication.

The foregoing RRC message may carry the attach request message or the registration request message.

For example, the terminal transmits an attach request message to an access network device by using an RRC message. The attach request message carries a first S&F indication. The first S&F indication is used for indicating to a first core network element MME that the terminal has an S&F communication capability or indicating that the terminal uses S&F communication. The RRC message carries a second S&F indication. The second S&F indication is used for indicating to the access network device that the terminal uses S&F communication. The S&F communication refers to communication in which the terminal uses the satellite communication-based store-and-forward communication mode.

In the foregoing implementation, attach or registration of the terminal in the satellite communication-based store-and-forward communication mode is explicitly indicated to a core network or an access network by using the foregoing first indication information or second indication information.

It should be noted that in this embodiment of this application, it is not limited that the attach or registration of the terminal in the satellite communication-based store-and-forward communication mode is explicitly indicated to the core network or the access network by using the foregoing first indication information or second indication information, and the attach or registration of the terminal in the satellite communication-based store-and-forward communication mode may alternatively be implicitly indicated to the core network or the access network, which is not limited. For example, if the core network or the access network currently supports or allows only the satellite communication-based store-and-forward communication mode, when receiving an attach, registration, or another NAS message of a UE, it may be considered that the terminal communicates using the satellite communication-based store-and-forward communication mode or has a capability of the satellite communication-based store-and-forward communication mode.

As an optional implementation, the method further includes:
receiving, by the terminal, second information transmitted by a network side, the second information including at least one of the following:
a satellite period;
a time or time window for next access of the terminal;
cell information for next access of the terminal;
an indication that an attach request, a registration request, or non-access stratum (Non-Access Stratum, NAS) signaling is suspended;
a valid duration for attach or registration recovery of the terminal;
a registration recovery indication; and
a NAS signaling or procedure suspend recovery indication.

The foregoing second information may be transmitted by the first core network element or the access network device, and the foregoing second information may be transmitted by using one or more messages.

The foregoing satellite period may be used by the terminal to calculate the time or time window for next access.

The time for next access of the terminal may be a valid time for next access of the terminal to a network, and the time window for next access of the terminal may be a valid time range for next access of the terminal.

The time or time window for next access of the terminal may be used by the terminal to determine a time for performing next attach or registration recovery, or may be a periodic time such as (3:00-3:15, 6:00-6:15, 9:00-9:15, with an interval period of 3 hours), or may be a specific time period such as (3:00-3:15).

The cell information for next access of the terminal may be a cell identifier for next access of the terminal.

The foregoing NAS signaling or procedure suspend recovery indication represents the foregoing NAS signaling suspend recovery indication or the foregoing NAS signaling or procedure suspend recovery indication.

The foregoing NAS signaling is NAS signaling related to attach or registration, or NAS signaling for another NAS signaling or procedure, such as PDN establishment, PDN establishment complete, or a service request.

The foregoing valid duration for attach or registration recovery of the terminal may be a valid retention time for attach or registration. That is, it is a valid duration during which the network side stores context or suspended signaling data for the UE, to ensure that the UE enables the terminal to initiate registration recovery or recovery of another NAS signaling or procedure within the valid duration for recovery.

In this implementation, the second information includes a satellite period, a time or time window for next access of the terminal, cell information for next access of the terminal, an indication that an attach request, a registration request, or NAS signaling is suspended, a valid duration for attach or registration recovery of the terminal. In this way, attach or registration recovery may be initiated based on the information, to improve communication performance of the terminal.

It should be noted that in a case that the indication that the attach request, the registration request, or NAS signaling is suspended is not included in the second information, the other information in the second information may implicitly indicate that the attach request, the registration request, or the NAS signaling is suspended.

As an optional implementation, the method further includes:
initiating an attach or registration recovery procedure in a case that one satellite period is met, the time or time window for next access of the terminal is reached, a cell for next access of the terminal is matched, a registration or attach recovery indication is received, a NAS signaling or procedure suspend recovery indication is received, or a service link is detected to be available.

The initiating an attach or registration recovery procedure in a case that one satellite period is met, the time or time window for next access of the terminal is reached, a cell for next access of the terminal is matched, a registration or attach recovery indication is received, a NAS signaling or procedure suspend recovery indication is received, or a service link is detected to be available may be understood as initiating the attach or registration recovery procedure in a case that any one or more of the following are met:
one satellite period is met;
the time or time window for next access of the terminal is reached;
the cell for next access of the terminal is matched;
the registration or attach recovery indication is received;
the NAS signaling or procedure suspend recovery indication is received; and
the service link is detected to be available.

For example, the terminal starts a next access timer, and a duration of the timer matches the time or time window for next access of the terminal. In this way, when the timer times out or expires, the attach or registration recovery procedure is initiated.

In the foregoing implementation, the attach or registration recovery procedure is initiated in a case that one satellite period is met, the time or time window for next access of the terminal is reached, the cell for next access of the terminal is matched, the registration recovery indication is received, the NAS signaling or procedure suspend recovery indication is received, or the service link is detected to be available. In this way, a success rate of attach or registration recovery can be increased.

Optionally, the initiating an attach or registration recovery procedure includes at least one of the following:
initiating an RRC connection establishment or connection resume procedure; and
transmitting an attach suspend recovery request, a registration suspend recovery request, an RRC signaling suspend recovery indication, or a NAS signaling suspend recovery indication.

In this implementation, the attach or registration recovery procedure may be initiated in multiple manners, to meet different scenario requirements and improve compatibility of the terminal. For example, for a scenario in which the access network device and the first core network element are on the satellite, an attach suspend recovery request and a registration suspend recovery request may be transmitted. For a scenario in which the access network device is on the satellite and the first core network element is not on the satellite, an RRC connection establishment or connection resume procedure may be initiated.

In some implementations, the foregoing attach suspend recovery request, registration suspend recovery request, RRC signaling suspend recovery indication, or NAS signaling suspend recovery indication may carry identification information of the terminal, and may further carry an S&F indication. The S&F indication may indicate at least one of the following:
indicating use of the satellite communication-based store-and-forward communication mode; and
indicating a capability of supporting the satellite communication-based store-and-forward communication mode.

Optionally, the initiating an attach or registration recovery procedure in a case that one satellite period is met, the time or time window for next access of the terminal is reached, a cell for next access of the terminal is matched, a registration recovery indication is received, a NAS signaling or procedure suspend recovery indication is received, or a service link is detected to be available includes:
initiating the attach or registration recovery procedure in a case that one satellite period is met, the time or time window for next access of the terminal is reached, the cell for next access of the terminal is matched, the registration recovery indication is received, the NAS signaling or procedure suspend recovery indication is received, or the service link is detected to be available and the terminal is within the valid duration for attach or registration recovery.

In this implementation, a condition within the valid duration for attach or registration recovery of the terminal is added based on the foregoing implementation, so that it is easier for the attach or registration recovery to succeed, which prevents deletion of related information of the UE by the network side, an incapability to associate the suspended procedure, and failure of registration or NAS signaling or procedure recovery caused by the terminal failing to initiate attach, registration, or NAS signaling or procedure recovery for a long time.

In this embodiment of this application, a terminal acquires first information, where the first information includes at least one of the following: a network supporting a satellite communication-based store-and-forward communication mode; and the network performing the satellite communication-based store-and-forward communication mode. The terminal performs a first operation in the satellite communication-based store-and-forward communication mode according to the first information. The first operation includes an attach operation or a registration operation. In this way, the first operation in the satellite communication-based store-and-forward communication mode is performed according to the first information. The first operation includes an attach operation or a registration operation. Therefore, attach or registration in an NTN is supported, thereby improving communication performance of the terminal.

Referring to FIG. 5, FIG. 5 is a flowchart of an NTN communication method according to an embodiment of this application, which, as shown in FIG. 5, includes the following steps:
Step 501: A first core network element acquires third information.

The foregoing first core network element may be an MME or another core network element, such as an SGW or a PDN, which is not limited.

The acquiring, by a first core network element, third information may be receiving the third information transmitted by the terminal or the access network device, or may include local information acquired by the first core network element.

In addition, the acquiring third information may be acquiring the third information by using one or more operations.

The foregoing third information may include information related to store-and-forward communication.

Step 502: The first core network element performs an attach operation or a registration operation in a satellite communication-based store-and-forward communication mode according to the third information.

The performing, by the first core network element, an attach operation or a registration operation in a satellite communication-based store-and-forward communication mode according to the third information may be performing, by the first core network element, an attach operation such as attach suspend or attach recovery in the satellite communication-based store-and-forward communication mode according to the third information, or performing, by the first core network element according to the third information, a registration operation such as registration suspend or registration recovery in the satellite communication-based store-and-forward communication mode.

Optionally, the third information includes at least one of the following:
indication information, the indication information being used for indicating at least one of the following: use of the satellite communication-based store-and-forward communication mode; a capability of supporting the satellite communication-based store-and-forward communication mode; and access of a terminal by using the satellite communication-based store-and-forward communication mode;
a satellite period;
a first return time, the first return time being a time when an access network device on a satellite next returns to access the first core network element;
a first-type attach request message, attach of the first-type attach request message being of an attach type of the satellite communication-based store-and-forward communication mode;
a first-type registration request message, registration of the first-type registration request message being of a registration type of the satellite communication-based store-and-forward communication mode; and
first local configuration information, the first local configuration information indicating that access of the terminal is access by using the satellite communication-based store-and-forward communication mode.

The foregoing first return time may be applicable to a scenario in which the access network device is on the satellite and the first core network element is on the ground. It should be noted that in this embodiment of this application, for an implementation without scenario description, it indicates that the method is applicable to all NTN scenarios.

The foregoing first local configuration information may implicitly indicate that access of the terminal is access by using the satellite communication-based store-and-forward communication mode. For example, when the terminal enters a region, the first core network element determines that the first core network element enters the satellite communication-based store-and-forward communication mode. Alternatively, configuration of the first core network element can be applied only to the satellite communication-based store-and-forward communication mode. That is, the indication information does not need to indicate the satellite communication-based store-and-forward communication mode.

Optionally, the indication information includes at least one of the following:
first indication information, and third indication information.

The first indication information is carried in an attach request message or a registration request message, and is used for indicating at least one of the following: indicating use of the satellite communication-based store-and-forward communication mode; and
indicating a capability of supporting the satellite communication-based store-and-forward communication mode.

The third indication information is used for indicating access of the terminal by using the satellite communication-based store-and-forward communication mode.

Optionally, the performing an attach operation or a registration operation in the satellite communication-based store-and-forward communication mode includes:
suspending an attach or registration procedure of a terminal or suspending a session establishment procedure of the terminal in a case that a service link is available and a feeder link is not available.

In a case that the attach or registration procedure of the terminal is suspended or the session establishment procedure of the terminal is suspended, the first core network element may transmit a related message to the terminal or the access network device, for example, transmit an attach suspend request, a registration suspend request, or a session establishment suspend request, and these requests may carry at least one of the following:
a satellite period;
a time or time window for next access of the terminal;
cell information for next access of the terminal;
an indication that an attach request, a registration request, or non-access stratum NAS signaling is suspended; and
a valid duration for attach or registration recovery of the terminal.

In the foregoing implementation, since the attach or registration procedure of the terminal is suspended or the session establishment procedure of the terminal is suspended, satellite movement in the NTN can be well matched, so that an attach or registration service can be better provided for the terminal in the NTN.

Optionally, the foregoing method further includes at least one of the following:
transmitting at least one of the following to the terminal: a satellite period; a time or time window for next access of the terminal; cell information for next access of the terminal; an indication that an attach request, a registration request, or non-access stratum NAS signaling is suspended; and a valid duration for attach or registration recovery of the terminal;
resuming the suspended attach or registration procedure in a case that the feeder link is available, the resuming the suspended attach or registration procedure including at least one of the following: authentication of the terminal, acquisition of encryption information, and a session establishment procedure;
resuming the suspended attach or registration procedure in a case that the feeder link is available or the first return time is reached, the resuming the suspended attach or registration procedure including transmitting a first NAS message to a RAN, the first NAS message including at least one of the following: an authentication request of the terminal, a security command, an attach accept message, and a registration accept message;
transmitting, in a case that the service link is available or an attach recovery indication from the terminal is received, a second NAS message to the terminal, the second NAS message including at least one of the following: an authentication request of the terminal, a security command, an attach accept message, and a registration accept message; and
transmitting a registration recovery indication or transmitting a NAS signaling or procedure suspend recovery indication to the terminal in a case that the service link is available.

The resuming the suspended attach or registration procedure may be resuming the suspended attach or registration procedure in a case that the first core network element receives a recovery request transmitted by the terminal or the access network device, or may be determined by the first core network element based on a link status (available or not available) or a time (e.g., from 1:00 to 1:15 when the terminal can be connected).

A plurality of procedures included during the resuming the suspended attach or registration procedure may be performed within one satellite period or multiple satellite periods.

The transmitting a second NAS message to the terminal may be performed within one satellite period or multiple satellite periods.

The attach or registration recovery indication may be an attach or registration recovery request or an attach or registration request.

In the foregoing implementation, the suspended attach or registration procedure may be resumed in multiple manners, and may be applied to different scenarios to make the attach or registration of the terminal more reliable, which, for example, may be applied to any of the following scenarios:
the access network device, the first core network element, the SGW, and the PGW are on the satellite;
the access network device and the first core network element are on the satellite, while the SGW and the PGW are not on the satellite; and
the access network device is on the satellite, while the first core network element, the SGW, and the PGW are not on the satellite.

It should be noted that this embodiment is an implementation of the corresponding first core network element in the embodiment shown in FIG. 4. For a specific implementation thereof, refer to related descriptions of the embodiment shown in FIG. 4. To avoid repeated descriptions, details are not described again in this embodiment.

Referring to FIG. 6, FIG. 6 is a flowchart of an NTN communication method according to an embodiment of this application, which, as shown in FIG. 6, includes the following steps:
Step 601: An access network device acquires fourth information.
Step 602: The access network device performs an attach operation or a registration operation in a satellite communication-based store-and-forward communication mode according to the fourth information;
   where the fourth information includes at least one of the following:
   second indication information, the second indication information being used for indicating that a terminal uses the satellite communication-based store-and-forward communication mode; and
   second local configuration information, the second local configuration information indicating that the access network device is in the satellite communication-based store-and-forward communication mode.

The acquiring, by an access network device, fourth information may be receiving the fourth information transmitted by the terminal or may be determining the fourth information by the access network device based on local information.

The foregoing second local configuration information may implicitly indicate that access of the terminal is access by using the satellite communication-based store-and-forward communication mode. For example, when the terminal enters a region, the access network device determines that the access network device enters the satellite communication-based store-and-forward communication mode. Alternatively, configuration of the access network device can be applied only to the satellite communication-based store-and-forward communication mode. That is, the indication information does not need to indicate the satellite communication-based store-and-forward communication mode.

The foregoing access network device may be on the satellite.

Optionally, the second indication information is carried in a radio resource control RRC message transmitted to a radio access network RAN.

Optionally, the performing an attach operation or a registration operation in the satellite communication-based store-and-forward communication mode includes at least one of the following:
suspending a third NAS message in a case that a service link is not available, the third NAS message including at least one of the following: an attach request of the terminal, a registration request of the terminal, an authentication response of the terminal, a security command reply, a security command, an authentication request, an attach accept message, and a registration accept message;
forwarding a fourth NAS message to a first core network device in a case that the service link is available, the fourth NAS message including at least one of the following: an attach request of the terminal, a registration request of the terminal, an authentication recovery of the terminal, a security command reply, an attach complete message, and a registration complete message; and
transmitting, to the terminal in a case that the service link is available and a feeder link is not available, at least one of the following:
   a satellite period;
   a time or time window for next access of the terminal;
   cell information for next access of the terminal;
   an indication that an attach request, a registration request, or NAS signaling is suspended;
   a registration recovery indication; and
   a NAS signaling or procedure suspend recovery indication.

It should be noted that all forwarding in this embodiment of this application may be expressed as transmitting.

The suspending a third NAS message may be performed within one satellite period or multiple satellite periods.

The forwarding a fourth NAS message to a first core network device may be performed within one satellite period or multiple satellite periods.

The transmitting information to the terminal may be performed within one satellite period or multiple satellite periods.

The foregoing implementation may be applied to a scenario in which the access network device is on the satellite and the first core network element is on the ground. Certainly, this is not limited. For example, the implementation may also be applied to a scenario in which the access network device and the first core network element are both on the satellite.

Optionally, the method further includes:
forwarding a fifth NAS message to the terminal in a case that the service link is available, an RRC connection is resumed, or a non-access stratum NAS connection resume indication from the terminal is received, the fifth NAS message including at least one of the following: an authentication request transmitted by the first core network device to the terminal, a security command transmitted by the first core network device to the terminal, an attach accept message, and a registration accept message.

The forwarding a fifth NAS message to the terminal may be performed within one satellite period or multiple satellite periods.

The foregoing implementation may be applied to a scenario in which the access network device is on the satellite and the first core network element is on the ground. Certainly, this is not limited. For example, the implementation may also be applied to a scenario in which the access network device and the first core network element are both on the satellite.

Optionally, the method further includes:
selecting, by the access network device, a first core network element that supports the satellite communication-based store-and-forward communication mode.

The selecting, by the access network device, a first core network element that supports the satellite communication-based store-and-forward communication mode may be selecting, in a case that an attach request or registration request from the terminal is received, the first core network element that supports the satellite communication-based store-and-forward communication mode, so that the terminal performs attach or registration in the satellite communication-based store-and-forward communication mode.

The access network device always selects the first core network element on the satellite.

Optionally, the method further includes:
transmitting, in a case that the feeder link is available, a satellite period or a second return time to the first core network element, the second return time being a time when the access network device next returns to access the first core network element.

The foregoing implementation may be applied to a scenario in which the access network device is on the satellite and the first core network element is on the ground.

It should be noted that this embodiment is an implementation of the corresponding access network device in the embodiments shown in FIG. 4 and FIG. 5. For a specific implementation thereof, refer to related descriptions of the embodiments shown in FIG. 4 and FIG. 5. To avoid repeated descriptions, details are not described again in this embodiment.

The method provided in the embodiments of this application is illustrated below by taking attach as an example and using multiple embodiments:

### Embodiment 1:

This embodiment mainly describes attach processing performed by the RAN, the MME, the SGW, and the PGW on the satellite: the MME provides the UE with next access time of the UE, and a NAS layer triggers recovery of the attach procedure.

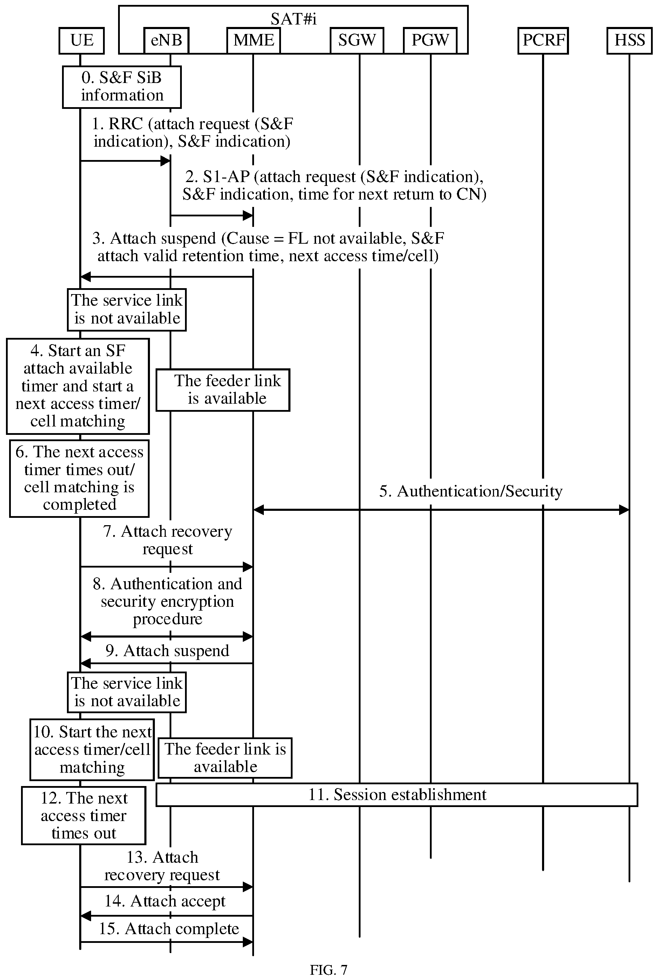

This embodiment describes a UE attach procedure with the eNB, the MME, the SGW, and the PGW on the satellite, which, as shown in FIG. 7, includes the following steps:
Step 0. The UE is informed, by a system information block (System Information Block, SIM) message, that the network supports or performs S&F communication.
Step 1. The UE transmits an attach request (Attach request) to the eNB by using an RRC message. The attach request carries a first S&F indication or an S&F capability. The first S&F indication or the S&F capability is used for indicating to the MME that the UE has an S&F communication capability or indicating that the UE uses S&F communication. The RRC message carries a second S&F indication. The second S&F indication is used for indicating to the eNB that the UE uses S&F communication.
Step 2. The eNB receives the foregoing RRC message carrying the attach request from the UE, the eNB selects, based on the second S&F indication, an MME supporting S&F, and the eNB forwards the attach request to the selected MME by using an S1-AP message. The S1-AP message may further carry a third S&F indication used for indicating that the UE performs S&F communication, and the S1-AP message further carries satellite period information or a time for next return to UE access.
Step 3. After receiving the attach request of the UE forwarded by the RAN, the MME determines, according to the first S&F indication or the S&F capability in the attach request, that the UE performs S&F communication, or determines, based on the third S&F indication carried in the S1-AP message, that the UE performs S&F communication.
   a) The MME transmits an attach suspend request (attach suspend request) to the UE. The attach suspend request is used for indicating that an attach procedure of the UE is suspended. The MME further retains related content in the attach request of the UE. The attach suspend request may further carry a suspend cause, e.g., a feeder link is not available (feeder link is not available). The attach suspend request further carries time information for next access of the UE or cell information for next access, identified as Cell X, and a UE attach valid retention time. The time information for next access of the UE indicates a valid time for next access of the UE to the network (that is, if the UE initiates network access at another time, it is useless because the network side does not have information of the UE and cannot complete communication with the UE), such as (3: 00-3:15), for the UE to determine a time to perform next attach recovery, which may alternatively be a periodic time such as (3: 00-3:15, 6:00-6:15, 9:00-9:15, with an interval period of 3 hours). The UE attach valid retention time indicates that the UE must initiate attach recovery within the time. Otherwise, the network side does not ensure that attach information of the UE is still retained. The time for next access of the UE may be determined based on the satellite period information or time information for next return to UE access provided by the eNB in step 2, or may be determined based on configuration information stored in the MME.
   b) In one implementation, in this step, after receiving the attach request of the UE forwarded by the RAN, the MME may alternatively transmit an attach reject message to the UE. A reject cause is that attach is suspended. The attach reject message further carries time information for next access of the UE and a UE attach valid retention time. The MME stores information in the attach request of the UE.
Step 4. After receiving the foregoing attach suspend request or attach reject message, the UE knows that attach of the UE is suspended. The UE performs at least one of the following:
   a) The UE starts a timer for the time for next access of the UE, and a value of the timer for the time for next access of the UE may be the time for next access of the UE received in step 3, or a satellite period pre-configured by the UE, or the satellite period or UE access time information provided in the SIB message in step 0, or obtained from previous communication. Alternatively, the UE performs matching of Cell X received in step 3.
   b) The UE starts an attach valid retention next access timer of the UE, and a value of the timer is set to the UE attach valid retention time received in step 3.
Step 5. When the feeder link (feeder link) is available, the MME acquires subscription information, authentication information, and security-related parameters of the UE from an HSS.
Step 6. The UE initiates an attach recovery operation after the timer for the time for next access of the UE expires or times out or Cell X matches.
Step 7. The UE transmits an attach recovery request (attach recovery request), carrying an ID of the UE and an S&F indication, used for resuming a previously suspended attach procedure. If the UE receives attach reject carrying suspend in step 3, the UE transmits an attach request carrying an attach recovery/S&F recovery indication, used for indicating resuming the previously suspended attach procedure.
Step 8. After receiving the foregoing attach recovery request or the attach request carrying the attach recovery/S&F recovery indication, the MME determines that the UE performs an attach recovery procedure and the MME performs authentication and security encryption procedures for the UE.
Step 9. The MME initiates attach suspend of the UE again because a session (session) is not established, and the MME transmits an attach suspend message to the UE, carrying a suspend cause that the session is not established.
Step 10. After the UE receives the attach suspend in step 9, the UE again starts the timer for the time for next access of the UE or performs matching of Cell X.
Step 11. The MME initiates session establishment when the feeder link is available.
Step 12. The UE initiates an attach recovery operation after the timer for the time for next access of the UE expires or Cell X matches.
Step 13. The UE transmits an attach recovery request, to trigger a NAS connection.
Step 14. The MSC transmits an attach accept (attach accept) message to the UE.
Step 15. The UE transmits an attach complete (attach complete) message to the MME.

### Embodiment 2:

This embodiment mainly describes a UE attach procedure with the eNB and the MME on the satellite and the SGW and the PGW on the ground, in which the MME provides the UE with next access time of the UE, and the NAS layer triggers recovery of the attach procedure.

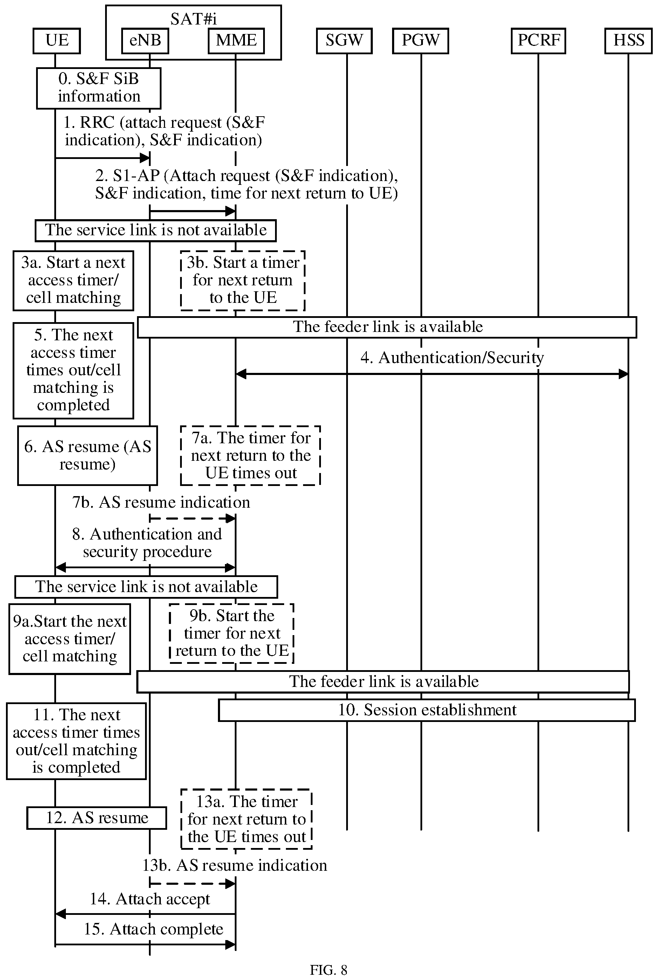

A main difference between this embodiment and Embodiment 1 lies in that the SGW and the PGW are on the ground. A specific procedure is the same as that in Embodiment 1, and details are not described herein. As shown in FIG. 8, the main difference includes the following:
Step 3b: The MME starts a timer for next return to the UE.
Step 6. The UE transmits an AS resume (AS resume) request.
Step 7a: The timer for next return to the UE times out.
Step 7b: The eNB transmits an AS resume indication to the MME.
Step 9b: The MME starts the timer for next return to the UE.
Step 13a: The timer for next return to the UE times out.
Step 13b: The NB transmits an AS resume indication to the MME.

### Embodiment 3:

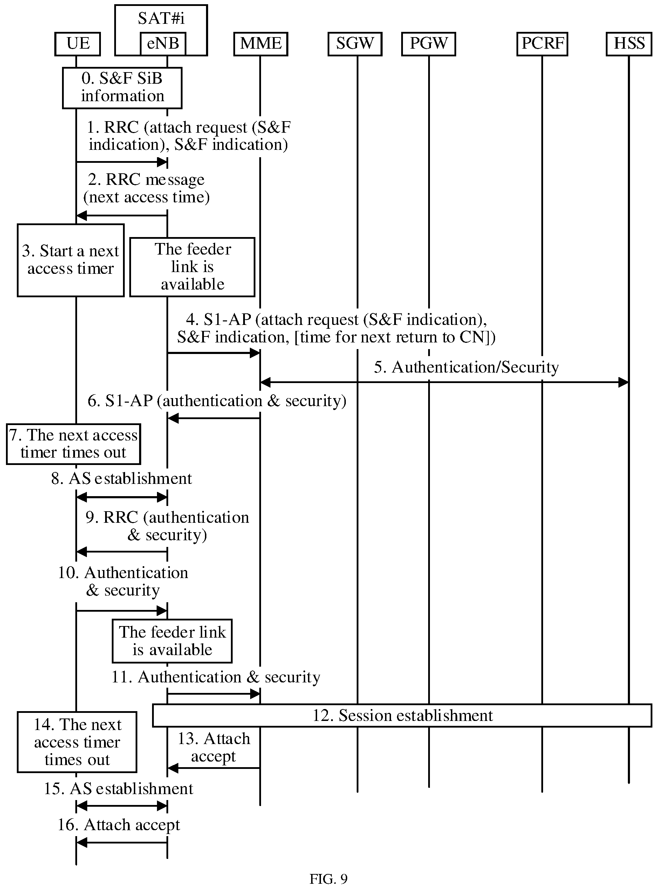

This embodiment mainly describes an attach procedure with only the RAN on the satellite, in which the RAN provides the UE with next access time and the RAN suspends attach-related signaling. As shown in FIG. 9, the procedure includes the following steps:
Step 0 to step 1 are the same as those in Embodiment 1.
Step 2. Since the feeder link is not available, the eNB cannot transmit an access request of the UE to the MME. Therefore, the eNB stores the access request of the UE, and transmits an RRC message to the UE. The message indicates that the NAS signaling of the UE is suspended, and further carries next access time of the UE. Time information for next access of the UE indicates a valid time for next access of the UE to the network, for example, (3:00-3:15), which may alternatively be a periodic time such as (3:00-3:15, 6:00-6:15, 9:00-9:15, with an interval period of 3 hours).
Step 3. The UE starts a second timer, and the second timer is set according to the next access time of the UE.
Step 4. When the feeder link is available, the eNB selects, based on the second S&F indication, an MME supporting S&F, and the eNB forwards the attach request to the selected MME by using an S1-AP message. The S1-AP message may further carry a third S&F indication used for indicating that the UE performs S&F communication, and the S1-AP message further carries satellite period information or next satellite return time.
Step 5. The MME acquires subscription, authentication, and security-related parameters of the UE.
Step 6. The MME transmits authentication and security-related signaling and parameters of the UE to the eNB, and the eNB stores the authentication and security-related signaling and parameters.
Step 7. After the second timer of the UE expires, the UE initiates an RRC resume procedure.
Step 8. The UE and the eNB establish an RRC connection.
Step 9. The eNB forwards the authentication and security-related signaling and parameters that are transmitted by the MME to the UE.
Step 10. The UE performs authentication and security-related operations and transmits authentication and security-related reply messages and parameters to the eNB, the eNB stores the authentication and security-related reply messages and parameters, and the UE restarts the second timer.
Step 11. When the feeder link is available, the eNB transmits the authentication and security-related reply messages and parameters of the UE to the MME.
Step 12. The MME performs session establishment of the UE.
Step 13. The MME transmits attach accept of the UE to the eNB.
Step 14: The second timer of the UE expires.
Step 15. The UE initiates an RRC resume procedure.
Step 16. The eNB forwards the attach accept of the UE to the UE.

### Embodiment 4:

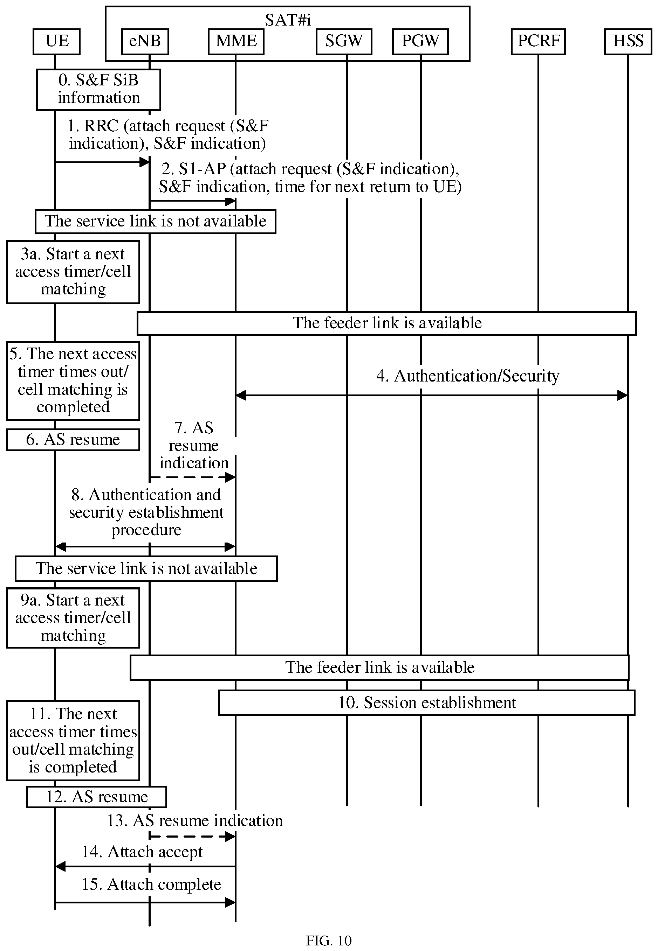

This embodiment mainly describes an attach procedure in which the RAN and the MM are on the satellite and the UE knows next access time. As shown in FIG. 10, the procedure includes the following steps:
Step 1 to step 2 are the same as those in Embodiment 1.
Step 3a: When the service link is not available, the UE starts a next access timer or performs a cell matching operation. The performing cell matching is matching a current cell, identified as Cell X.
Step 3b: Optionally, when the service link is not available, the MME starts a timer for next return to the UE. A value of the timer may be provided by the eNB in step 2 or determined according to a configured satellite period.
Step 4. When the feeder link is available, the MME acquires subscription, authentication, and security-related information of the UE.
Step 5. The next access timer of the UE expires or the cell matches Cell X.
Step 6. The UE initiates an AS layer connection resume procedure, that is, the RRC connection previously established between the UE and the eNB is resumed.
Step 7. The eNB transmits, to the MME, an indication that the service link has been resumed.
Step 8: After receiving the indication that the service link has been resumed transmitted by the eNB, the MME performs authentication and security establishment procedures with the UE.
Step 9. When the service link is not available again, the UE restarts the next access timer or performs cell matching, the performing cell matching is matching a current cell, identified as Cell X, and the MME restarts the timer for next return to the UE. A value of the timer may be provided by the eNB in step 2 or determined based on a configured satellite period.
Step 10. The MME initiates a session establishment procedure of the UE when the feeder link is available.
Step 11 to step 13 are the same as step 5 to step 7 in Embodiment 1.
Step 14. The MME transmits an attach accept message to the UE.
Step 15. The UE resumes an attach complete message to the MME.

### Embodiment 5:

This embodiment mainly describes an attach procedure in which the RAN and the MME are on the satellite, the SGW and the PGW are on the ground, and the UE knows next access time.

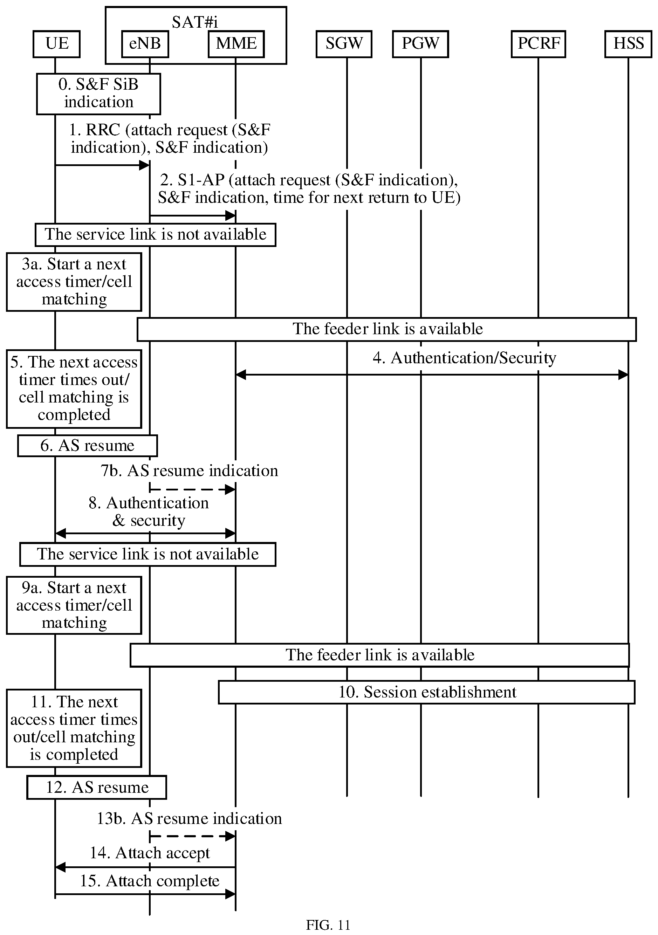

As shown in FIG. 11, main steps of this embodiment are the same as those in Embodiment 4. Details are not described herein.

### Embodiment 6:

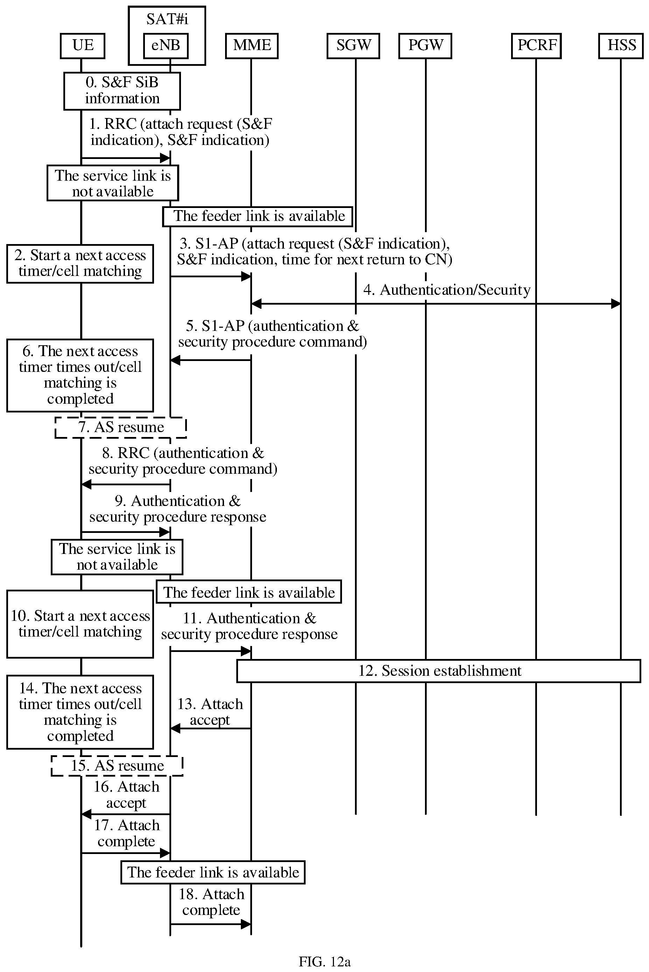

This embodiment mainly describes an attach procedure in which the RAN is on the satellite, the MME is on the ground, and the UE knows next access time. As shown in FIG. 12a, the procedure includes the following steps:
Step 0 is the same as that in Embodiment 1.
Step 1. The UE transmits an attach request to the eNB by using an RRC message. The attach request carries a first S&F indication or an S&F capability. The first S&F indication or the S&F capability is used for indicating to the MME that the UE has an S&F communication capability or indicating that the UE uses S&F communication. The RRC message carries a second S&F indication. The second S&F indication is used for indicating to the eNB that the UE uses S&F communication.
Step 2. The satellite moves, and the service link between the UE and the eNB is not available. The UE starts a next access timer. The UE starts a next access timer or performs a cell matching operation. The performing cell matching is matching a current cell, identified as Cell X.
Step 3. The satellite moves, and before the feeder link is available, the eNB suspends the attach request of the UE. When the feeder link is available, the eNB selects, based on the second S&F indication carried in the RRC message, an MME supporting an S&F communication operation, and the eNB transmits an S1-AP message to the MME. The S1-AP message carries the attach request of the UE and may also carry a third S&F indication used for indicating that the UE performs S&F communication. The S1-AP message further carries satellite period information or a time for next return to a CN, which is used for indicating a time when the eNB returns to access the MME again.
Step 4. The MME acquires subscription, authentication, and security-related parameters of the UE.
Step 5. The MME initiates authentication and security encryption procedures, and transmits authentication and security encryption command messages to the eNB. The eNB suspends the authentication and security encryption command messages of the UE.
Step 6. The next access timer of the UE expires or Cell X is matched.
Step 7. The UE performs AS layer access resume.
Step 8. The eNB transmits, to the UE, the suspended authentication and security encryption command messages of the UE.
Step 9. The UE replies with authentication and security encryption command response of the UE to the eNB.
Step 10. The satellite moves, and the service link between the UE and the eNB is not available. The UE restarts the next access timer, or the UE starts the next access timer or performs a cell matching operation. The performing cell matching is matching a current cell, identified as Cell X, as in Step 2.
Step 11. The satellite moves, and before the feeder link is available, the eNB suspends the attach request of the UE. When the feeder link is available, the eNB forwards the authentication and security encryption command response of the UE to the MME.
Step 12. The MME performs session establishment of the UE.
Step 13. The MME transmits an attach accept message of the UE to the eNB, and the eNB suspends the attach accept message of the UE.
Step 14. The next access timer of the UE expires or Cell X is matched.
Step 15. The UE performs AS layer access resume.
Step 16. The eNB forwards the attach accept message of the UE to the MME.
Step 17. The UE transmits an attach complete message to the eNB, and the eNB suspends the attach complete message of the UE.
Step 18. The satellite moves, and when the feeder link is available, the eNB forwards the attach complete message of the UE to the MME.

### Embodiment 7:

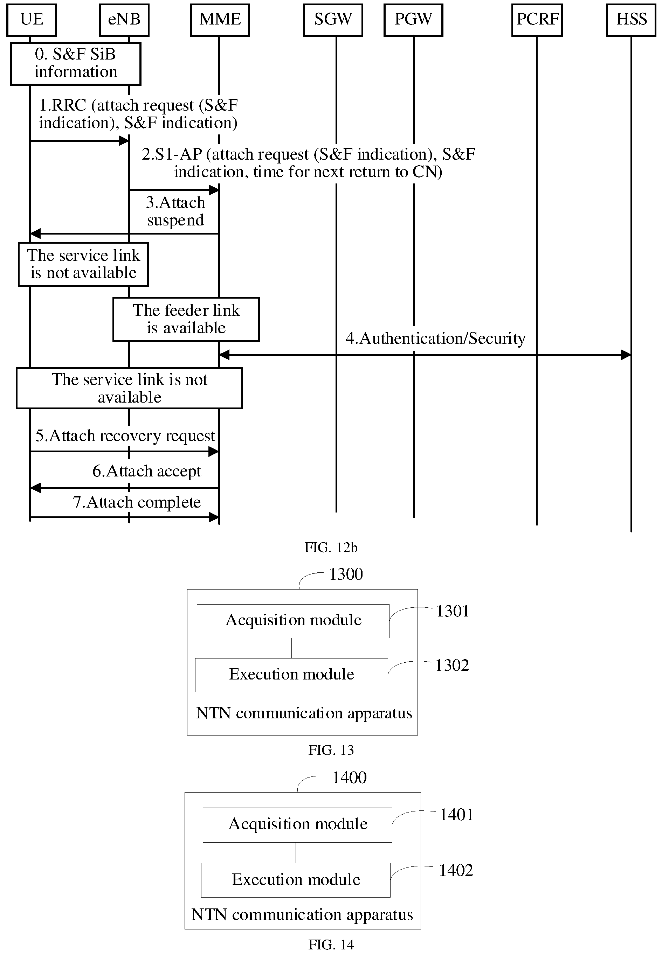

This embodiment mainly describes that the first core network or the access network indicates that the terminal resumes the suspended attach or NAS procedure. As shown in FIG. 12b, the procedure includes the following steps:
Step 1 to step 2 are the same as those in Embodiment 1.
Step 3. Since the feeder link is not available, the MME transmits an attach suspend indication to the UE.
Step 4. The MME acquires subscription, authentication, and security-related parameters of the UE.
Step 5. When the service link is available, the UE transmits an attach recovery indication to the UE.
Step 6. The UE replies with a response to the MME.
Step 7. The MME transmits downlink suspended data or signaling to the UE, such as an authentication request, a security command, or attach accept. At the same time, the UE may also transmit uplink data or signaling to the MME.

The following can be implemented in the foregoing embodiments:
In the attach procedure, the UE carries S&F indication information to the network-side device, indicating to the network side that it is S&F attach. The network-side device suspends the attach procedure of the UE, indicating that the attach procedure of the UE is suspended, and configures next access time for the UE. The UE initiates attach recovery when the next access time arrives, and completes the attach procedure of the UE through multiple times of attach recovery.

The NTN communication method provided in this embodiment of this application may be performed by an NTN communication apparatus. In the embodiments of this application, an NTN communication apparatus performing the NTN communication method taken as an example to illustrate an NTN communication apparatus provided in an embodiment of this application.

Referring to FIG. 13, FIG. 13 is a structural diagram of an NTN communication apparatus according to an embodiment of this application. As shown in FIG. 13, the NTN communication apparatus 1300 includes:
an acquisition module 1301, configured to acquire first information, where the first information includes at least one of the following: a network supporting a satellite communication-based store-and-forward communication mode; and the network performing the satellite communication-based store-and-forward communication mode; and
an execution module 1302, configured to perform a first operation in the satellite communication-based store-and-forward communication mode according to the first information, the first operation including an attach operation or a registration operation.

Optionally, the attach operation includes:
transmitting a first-type attach request message, attach of the first-type attach request message being of an attach type of the satellite communication-based store-and-forward communication mode; and
the registration operation includes:
   transmitting a first-type registration request message, registration of the first-type registration request message being of a registration type of the satellite communication-based store-and-forward communication mode.

Optionally, the first operation further includes:
transmitting first indication information; and
transmitting the second indication information;
where the first indication information is carried in the attach request message or registration request message, and the first indication information is used for indicating at least one of the following:
   indicating use of the satellite communication-based store-and-forward communication mode; and
   indicating a capability of supporting the satellite communication-based store-and-forward communication mode.

The second indication information is carried in a radio resource control RRC message transmitted to a RAN, and indicates that the terminal uses the satellite communication-based store-and-forward communication mode.

Optionally, the apparatus further includes:
a receiving module, configured to receive second information transmitted by a network side, the second information including at least one of the following:
a satellite period;
a time or time window for next access of the terminal;
cell information for next access of the terminal;
an indication that an attach request, a registration request, or non-access stratum NAS signaling is suspended; and
a valid duration for attach or registration recovery of the terminal;
a registration recovery indication; and
a NAS signaling or procedure suspend recovery indication.

Optionally, the apparatus further includes:
an initiation module, configured to initiate an attach or registration recovery procedure in a case that one satellite period is met, the time or time window for next access of the terminal is reached, a cell for next access of the terminal is matched, a registration recovery indication is received, a NAS signaling or procedure suspend recovery indication is received, or a service link is detected to be available.

Optionally, the initiating an attach or registration recovery procedure includes at least one of the following:
initiating an RRC connection establishment or connection resume procedure; and
transmitting an attach suspend recovery request, a registration suspend recovery request, an RRC signaling suspend recovery indication, or a NAS signaling suspend recovery indication.

Optionally, the initiating an attach or registration recovery procedure in a case that one satellite period is met, the time or time window for next access of the terminal is reached, a cell for next access of the terminal is matched, a registration recovery indication is received, a NAS signaling or procedure suspend recovery indication is received, or a service link is detected to be available includes:
initiating the attach or registration recovery procedure in a case that one satellite period is met, the time or time window for next access of the terminal is reached, the cell for next access of the terminal is matched, the registration recovery indication is received, the NAS signaling or procedure suspend recovery indication is received, or the service link is detected to be available and the terminal is within the valid duration for attach or registration recovery.

The foregoing communication apparatus for an NTN can improve communication performance of the terminal.

The NTN communication apparatus in this embodiment of this application may be an electronic device, for example, an electronic device with an operating system, or may be a component in the electronic device, for example, an integrated circuit or a chip. The electronic device may be a terminal or may be another device other than the terminal. For example, the terminal may include, but is not limited to, the types of the terminal 11 listed above. The another device may be a server, a network attached storage (Network Attached Storage, NAS), or the like, which is not specifically limited in the embodiments of this application.

The information transmission apparatus provided in this embodiment of this application can implement the processes implemented in the method embodiment in FIG. 4, and achieve a same technical effect. To avoid repetition, details are not described herein again.

Referring to FIG. 14, FIG. 14 is a structural diagram of an NTN communication apparatus according to an embodiment of this application. As shown in FIG. 14, the NTN communication apparatus 1400 includes:
an acquisition module 1401, configured to acquire third information; and
an execution module 1402, configured to perform an attach operation or a registration operation in the satellite communication-based store-and-forward communication mode according to the third information.

Optionally, the third information includes at least one of the following:
indication information, the indication information being used for indicating at least one of the following: use of the satellite communication-based store-and-forward communication mode; a capability of supporting the satellite communication-based store-and-forward communication mode; and access of a terminal by using the satellite communication-based store-and-forward communication mode;
a satellite period;
a first return time, the first return time being a time when an access network device on a satellite next returns to access the first core network element;
a first-type attach request message, attach of the first-type attach request message being of an attach type of the satellite communication-based store-and-forward communication mode;
a first-type registration request message, registration of the first-type registration request message being of a registration type of the satellite communication-based store-and-forward communication mode; and
first local configuration information, the first local configuration information indicating that access of the terminal is access by using the satellite communication-based store-and-forward communication mode.

Optionally, the indication information includes at least one of the following:
first indication information, and third indication information.

The first indication information is carried in an attach request message or a registration request message, and is used for indicating at least one of the following: indicating use of the satellite communication-based store-and-forward communication mode; and
indicating a capability of supporting the satellite communication-based store-and-forward communication mode;
the third indication information is used for indicating access of the terminal by using the satellite communication-based store-and-forward communication mode.

Optionally, the performing an attach operation or a registration operation in the satellite communication-based store-and-forward communication mode includes:
suspending an attach or registration procedure of a terminal or suspending a session establishment procedure of the terminal in a case that a service link is available and a feeder link is not available.

Optionally, the apparatus further includes at least one of the following:
a first transmission module, configured to transmit at least one of the following to the terminal: a satellite period; a time or time window for next access of the terminal; cell information for next access of the terminal; an indication that an attach request, a registration request, or non-access stratum NAS signaling is suspended; and a valid duration for attach or registration recovery of the terminal;
a first recovery module, configured to resume the suspended attach or registration procedure in a case that the feeder link is available, the resuming the suspended attach or registration procedure including at least one of the following: authentication of the terminal, acquisition of encryption information, and a session establishment procedure;
a second recovery module, configured to resume the suspended attach or registration procedure in a case that the feeder link is available or the first return time is reached, the resuming the suspended attach or registration procedure including transmitting a first non-access stratum NAS message to a radio access network RAN, the first NAS message including at least one of the following: an authentication request of the terminal, a security command, an attach accept message, and a registration accept message;
a second transmission module, configured to transmit, in a case that the service link is available or an attach recovery indication from the terminal is received, a second NAS message to the terminal, the second NAS message including at least one of the following: an authentication request of the terminal, a security command, an attach accept message, and a registration accept message; and
a third transmission module, configured to transmit a registration recovery indication or transmitting a NAS signaling or procedure suspend recovery indication to the terminal in a case that the service link is available.

The foregoing communication apparatus for an NTN can improve communication performance of the terminal.

The information transmission apparatus in the embodiments of this application may be an electronic device, for example, an electronic device having an operating system, or a component in an electronic device, for example, an integrated circuit or a chip. The electronic device may be a network-side device.

The information transmission apparatus provided in the embodiments of this application can implement the processes implemented in the method embodiment in FIG. 5, and achieve a same technical effect. To avoid repetition, details are not described herein again.

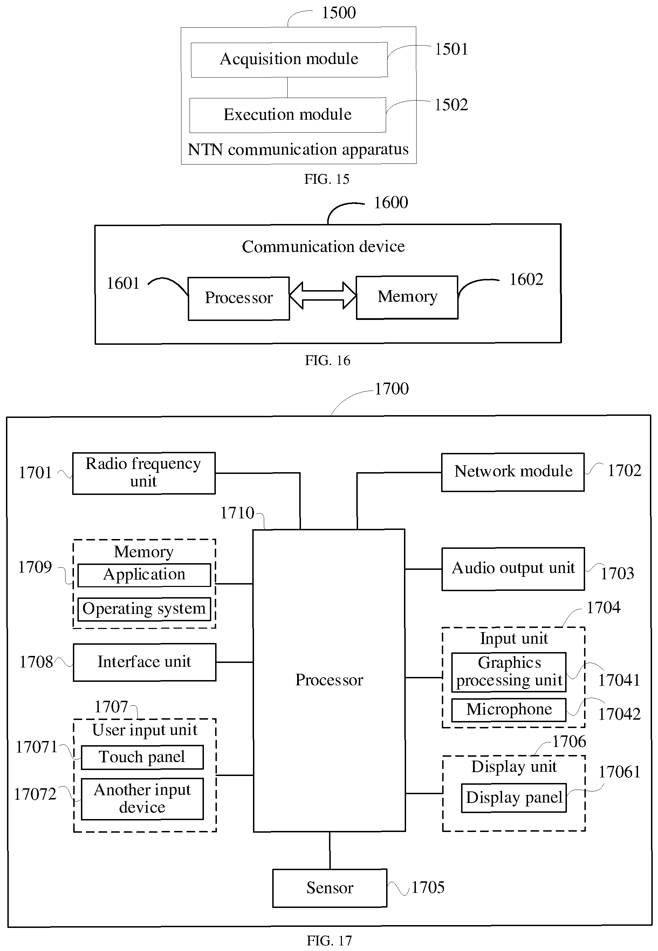

Referring to FIG. 15, FIG. 15 is a structural diagram of an NTN communication apparatus according to an embodiment of this application. As shown in FIG. 15, the NTN communication apparatus 1500 includes:
an acquisition module 1501, configured to acquire fourth information; and
an execution module 1502, configured to perform an attach operation or a registration operation in the satellite communication-based store-and-forward communication mode according to the fourth information.

The fourth information includes at least one of the following:
second indication information, the second indication information being used for indicating that a terminal uses the satellite communication-based store-and-forward communication mode; and
second local configuration information, the second local configuration information indicating that the access network device is in the satellite communication-based store-and-forward communication mode.

Optionally, the second indication information is carried in a radio resource control RRC message transmitted to a radio access network RAN.

Optionally, the performing an attach operation or a registration operation in the satellite communication-based store-and-forward communication mode includes at least one of the following:
suspending a third non-access stratum NAS message in a case that a service link is not available, the third NAS message including at least one of the following: an attach request of the terminal, a registration request of the terminal, an authentication response of the terminal, a security command reply, a security command, an authentication request, an attach accept message, and a registration accept message;
forwarding a fourth NAS message to a first core network device in a case that the service link is available, the fourth NAS message including at least one of the following: an attach request of the terminal, a registration request of the terminal, an authentication recovery of the terminal, a security command reply, an attach complete message, and a registration complete message; and
transmitting, to the terminal in a case that the service link is available and a feeder link is not available, at least one of the following:
   a satellite period;
   a time or time window for next access of the terminal;
   cell information for next access of the terminal;
   an indication that an attach request, a registration request, or NAS signaling is suspended;
   a registration recovery indication; and
   a NAS signaling or procedure suspend recovery indication.

Optionally, the apparatus further includes:
a forwarding module, configured to forward a fifth NAS message to the terminal in a case that the service link is available, an RRC connection is resumed, or a non-access stratum NAS connection resume indication from the terminal is received, the fifth NAS message including at least one of the following: an authentication request transmitted by the first core network device to the terminal, a security command transmitted by the first core network device to the terminal, an attach accept message, and a registration accept message.

Optionally, the apparatus further includes:
a selection module, configured to select a first core network element that supports the satellite communication-based store-and-forward communication mode.

Optionally, the apparatus further includes:
a transmission module, configured to transmit, in a case that the feeder link is available, a satellite period or a second return time to the first core network element, the second return time being a time when the access network device next returns to access the first core network element.

The foregoing communication apparatus for an NTN can improve communication performance of the terminal.

The information transmission apparatus in the embodiments of this application may be an electronic device, for example, an electronic device having an operating system, or a component in an electronic device, for example, an integrated circuit or a chip. The electronic device may be a network-side device.

The information transmission apparatus provided in the embodiments of this application can implement the processes implemented in the method embodiment in FIG. 6, and achieve a same technical effect. To avoid repetition, details are not described herein again.

Optionally, as shown in FIG. 16, an embodiment of this application further provides a communication device 1600, including a processor 1601 and a memory 1602. The memory 1602 stores a program or an instruction executable on the processor 1601. For example, in a case that the communication device 1600 is a terminal, the steps in the embodiments of the NTN communication method on the side of the terminal are implemented when the program or the instruction is executed by the processor 1601, and a same technical effect can be achieved. In a case that the communication device 1600 is a first core network element, the steps in the embodiments of the NTN communication method on the side of the first core network element are implemented when the program or the instruction is executed by the processor 1601, and a same technical effect can be achieved. In a case that the communication device 1600 is an access network device, the steps in the embodiments of the NTN communication method on the side of the access network device are implemented when the program or the instruction is executed by the processor 1601, and a same technical effect can be achieved. To avoid repetition, details are not described herein again.

An embodiment of this application further provides a communication device, including a processor and a communication interface. The communication interface is configured to acquire first information, where the first information includes at least one of the following: a network supporting a satellite communication-based store-and-forward communication mode; and the network performing the satellite communication-based store-and-forward communication mode; and perform a first operation in the satellite communication-based store-and-forward communication mode according to the first information. The first operation includes an attach operation or a registration operation. The embodiment of the communication device corresponds to the foregoing embodiment of the NTN communication method. Implementation processes and implementations of the embodiment of the method are all applicable to the embodiment of the communication device, and can achieve a same technical effect.

Specifically, FIG. 17 is a schematic diagram of a hardware structure of a terminal according to an embodiment of this application. The terminal 1700 includes, but is not limited to, at least some of the following components: a radio frequency unit 1701, a network module 1702, an audio output unit 1703, an input unit 1704, a sensor 1705, a display unit 1706, a user input unit 1707, an interface unit 1708, a memory 1709, a processor 1710, and the like.

A person skilled in the art can understand that the terminal 1700 may further include a power supply (such as a battery) for supplying power to all the components. The power supply may be logically connected to the processor 1710 by using a power management system, to implement functions such as charging management, discharging management, and power consumption management by using the power management system. The terminal structure shown in FIG. 17 does not impose a limitation on the terminal. The terminal may include more or fewer components than those shown in the figure, or combine some components, or adopt different component arrangements. Details are not described herein again.

It should be understood that, in the embodiments of this application, the input unit 1704 may include a graphics processing unit (Graphics Processing Unit, GPU) 17041 and a microphone 17042. The graphics processing unit 17041 performs processing on image data of a static picture or a video that is obtained by an image capture apparatus (for example, a camera) in a video capture mode or an image capture mode. The display unit 1706 may include a display panel 17061. The display panel 17061 may be configured in the form of a liquid crystal display, an organic light-emitting diode, or the like. The user input unit 1707 includes at least one of a touch panel 17071 and another input terminal 17072. The touch panel 17071 is also referred to as a touch screen. The touch panel 17071 may include two parts: a touch sensing apparatus and a touch controller. The another input terminal 17072 may include, but is not limited to, a physical keyboard, a functional key (for example, a volume control key or a switch key), a track ball, a mouse, and a joystick. Details are not described herein again.

In the embodiments of this application, the radio frequency unit 1701 receives downlink data from a network-side terminal, and then may transmit the downlink data to the processor 1710 for processing. In addition, the radio frequency unit 1701 may transmit uplink data to the network-side terminal. Generally, the radio frequency unit 1701 includes, but is not limited to, an antenna, an amplifier, a transceiver, a coupler, a low noise amplifier, a duplexer, and the like.

The memory 1709 may be configured to store a software program or instructions and various data. The memory 1709 may primarily include a first storage area configured to store the program and the instructions, and a second storage area configured to store the data. The first storage area may store an operating system, an application program or instructions required by at least one function (such as a sound playback function and an image display function), and the like. In addition, the memory 1709 may include a volatile memory or a non-volatile memory, or the memory 1709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DR RAM). The memory 1709 in this embodiment of this application includes, but is not limited to, these and any other suitable types of memories.

The processor 1710 may include one or more processing units. Optionally, the processor 1710 integrates an application processor and a modem processor. The application processor mainly processes operations related to an operating system, a user interface, an application, and the like. The modem processor mainly processes wireless communication signals, for example, a baseband processor. It may be understood that, the foregoing modem processor may not be integrated into the processor 1710.

The radio frequency unit 1701 is configured to acquire first information, where the first information includes at least one of the following: a network supporting a satellite communication-based store-and-forward communication mode; and the network performing the satellite communication-based store-and-forward communication mode; and perform a first operation in the satellite communication-based store-and-forward communication mode according to the first information. The first operation includes an attach operation or a registration operation.

Optionally, the attach operation includes:
transmitting a first-type attach request message, attach of the first-type attach request message being of an attach type of the satellite communication-based store-and-forward communication mode; and
the registration operation includes:
   transmitting a first-type registration request message, registration of the first-type registration request message being of a registration type of the satellite communication-based store-and-forward communication mode.

Optionally, the first operation further includes:
transmitting first indication information; and
transmitting the second indication information;
where the first indication information is carried in the attach request message or registration request message, and the first indication information is used for indicating at least one of the following:
   indicating use of the satellite communication-based store-and-forward communication mode; and
   indicating a capability of supporting the satellite communication-based store-and-forward communication mode.

The second indication information is carried in a radio resource control RRC message transmitted to a RAN, and indicates that the terminal uses the satellite communication-based store-and-forward communication mode.

Optionally, the radio frequency unit 1701 is further configured to:
receive second information transmitted by a network side, the second information including at least one of the following:
a satellite period;
a time or time window for next access of the terminal;
cell information for next access of the terminal;
an indication that an attach request, a registration request, or non-access stratum NAS signaling is suspended; and
a valid duration for attach or registration recovery of the terminal;
a registration recovery indication; and
a NAS signaling or procedure suspend recovery indication.

Optionally, the radio frequency unit 1701 is further configured to:
initiate an attach or registration recovery procedure in a case that one satellite period is met, the time or time window for next access of the terminal is reached, a cell for next access of the terminal is matched, a registration recovery indication is received, a NAS signaling or procedure suspend recovery indication is received, or a service link is detected to be available.

Optionally, the initiating an attach or registration recovery procedure includes at least one of the following:
initiating an RRC connection establishment or connection resume procedure; and
transmitting an attach suspend recovery request, a registration suspend recovery request, an RRC signaling suspend recovery indication, or a NAS signaling suspend recovery indication.

Optionally, the initiating an attach or registration recovery procedure in a case that one satellite period is met, the time or time window for next access of the terminal is reached, a cell for next access of the terminal is matched, a registration recovery indication is received, a NAS signaling or procedure suspend recovery indication is received, or a service link is detected to be available includes:
initiating the attach or registration recovery procedure in a case that one satellite period is met, the time or time window for next access of the terminal is reached, the cell for next access of the terminal is matched, the registration recovery indication is received, the NAS signaling or procedure suspend recovery indication is received, or the service link is detected to be available and the terminal is within the valid duration for attach or registration recovery.

The foregoing terminal can improve communication performance of the terminal.

It may be understood that for the implementation processes of the implementations described in this embodiment, refer to the related description of the foregoing sensing measurement result transmitting method, and a same or corresponding technical effect is achieved. To avoid repetition, details are not described herein again.

An embodiment of this application further provides a device, including a processor and a communication interface. The communication interface is coupled to the processor, and the processor is configured to run a program or an instruction, to implement steps of the method embodiment shown in FIG. 5. The embodiment of the device corresponds to the embodiment of the signal measurement method. Implementation processes and implementations in the foregoing method embodiment are all applicable to the embodiment of the device, and a same technical effect can be achieved.

An embodiment of this application further provides a device, including a processor and a communication interface. The communication interface is configured to acquire third information. The communication interface or the processor is configured to perform an attach operation or a registration operation in the satellite communication-based store-and-forward communication mode according to the third information.

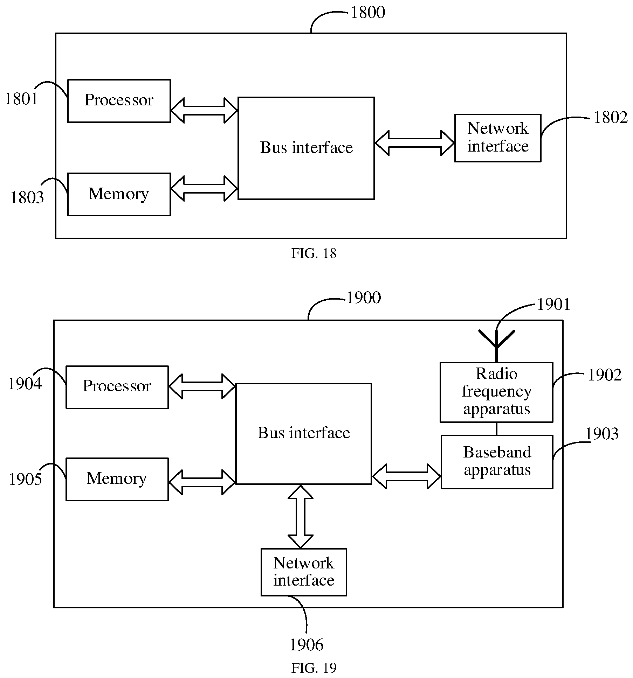

Specifically, an embodiment of this application further provides a network-side device. As shown in FIG. 18, the network-side device 1800 includes a processor 1801, a bus interface 1802, and a transceiver 1803. The network interface 1802 is, for example, a common public radio interface (common public radio interface, CPRI).

Specifically, the network-side device 1800 in this embodiment of this application further includes an instruction or a program stored in the memory 1803 and executable on the processor 1801. The processor 1801 uses the instruction or the program stored in the memory 1803 to perform the method performed by the modules shown in FIG. 14, and a same technical effect is achieved. To avoid repetition, details are not described herein again.

The network interface 1802 is configured to acquire third information.

The communication interface 1802 or the processor 1801 is configured to perform an attach operation or a registration operation in the satellite communication-based store-and-forward communication mode according to the third information.

Optionally, the third information includes at least one of the following:
indication information, the indication information being used for indicating at least one of the following: use of the satellite communication-based store-and-forward communication mode; a capability of supporting the satellite communication-based store-and-forward communication mode; and access of a terminal by using the satellite communication-based store-and-forward communication mode;
a satellite period;
a first return time, the first return time being a time when an access network device on a satellite next returns to access the first core network element;
a first-type attach request message, attach of the first-type attach request message being of an attach type of the satellite communication-based store-and-forward communication mode;
a first-type registration request message, registration of the first-type registration request message being of a registration type of the satellite communication-based store-and-forward communication mode; and
first local configuration information, the first local configuration information indicating that access of the terminal is access by using the satellite communication-based store-and-forward communication mode.

Optionally, the indication information includes at least one of the following:
first indication information, and third indication information.

The first indication information is carried in an attach request message or a registration request message, and is used for indicating at least one of the following: indicating use of the satellite communication-based store-and-forward communication mode; and
indicating a capability of supporting the satellite communication-based store-and-forward communication mode.

The third indication information is used for indicating access of the terminal by using the satellite communication-based store-and-forward communication mode.

Optionally, the performing an attach operation or a registration operation in the satellite communication-based store-and-forward communication mode includes:
suspending an attach or registration procedure of a terminal or suspending a session establishment procedure of the terminal in a case that a service link is available and a feeder link is not available.

Optionally, the network interface 1802 is further configured to perform at least one of the following:
transmitting at least one of the following to the terminal: a satellite period; a time or time window for next access of the terminal; cell information for next access of the terminal; an indication that an attach request, a registration request, or non-access stratum NAS signaling is suspended; and a valid duration for attach or registration recovery of the terminal;
resuming the suspended attach or registration procedure in a case that the feeder link is available, the resuming the suspended attach or registration procedure including at least one of the following: authentication of the terminal, acquisition of encryption information, and a session establishment procedure;
resuming the suspended attach or registration procedure in a case that the feeder link is available or the first return time is reached, the resuming the suspended attach or registration procedure including transmitting a first non-access stratum NAS message to a radio access network RAN, the first NAS message including at least one of the following: an authentication request of the terminal, a security command, an attach accept message, and a registration accept message;
transmitting, in a case that the service link is available or an attach or registration recovery indication from the terminal is received, a second NAS message to the terminal, the second NAS message including at least one of the following: an authentication request of the terminal, a security command, an attach accept message, and a registration accept message; and
transmitting a registration recovery indication or transmitting a NAS signaling or procedure suspend recovery indication to the terminal in a case that the service link is available.

The foregoing device can improve communication performance of the terminal.

It may be understood that for the implementation processes of all implementations mentioned in this embodiment, refer to the related descriptions in the foregoing method embodiments, and a same or corresponding technical effect is achieved. To avoid repetition, details are not described herein again.

An embodiment of this application further provides a device, including a processor and a communication interface. The communication interface is coupled to the processor, and the processor is configured to run a program or an instruction, to implement steps of the method embodiment shown in FIG. 6. The embodiment of the device corresponds to the embodiment of the sensing measurement receiving method. Implementation processes and implementations in the embodiment of the method are applicable to the embodiment of the device, and a same technical effect can be achieved.

An embodiment of this application further provides a device, including a processor and a communication interface. The communication interface is configured to acquire fourth information; and perform an attach operation or a registration operation in the satellite communication-based store-and-forward communication mode according to the fourth information. The fourth information includes at least one of the following: second indication information, the second indication information being used for indicating that a terminal uses the satellite communication-based store-and-forward communication mode; and second local configuration information, the second local configuration information indicating that the access network device is in the satellite communication-based store-and-forward communication mode.

Specifically, an embodiment of this application further provides a network-side device. As shown in FIG. 19, the network-side device 1900 includes: an antenna 1901, a radio frequency apparatus 1902, a baseband apparatus 1903, a processor 1904, and a memory 1905. The antenna 1901 is connected to the radio frequency apparatus 1902. In an uplink direction, the radio frequency apparatus 1902 receives information via the antenna 1901 and transmits the received information to the baseband apparatus 1903 for processing. In a downlink direction, the baseband apparatus 1903 processes to-be-transmitted information and transmits the information to the radio frequency apparatus 1902. The radio frequency apparatus 1902 processes received information and transmits the information via the antenna 1901.

The NTN communication method in the foregoing embodiments may be implemented in the baseband apparatus 1903. The baseband apparatus 1903 includes a baseband processor.

The baseband apparatus 1903 may include, for example, at least one baseband board. A plurality of chips are arranged on the baseband board. As shown in FIG. 19, one chip is, for example, a baseband processor, and is connected to the memory 1905 by using a bus interface, to invoke a program in the memory 1905 to perform operations of a device shown in the foregoing method embodiments.

The device may further include a network interface 1906, and the interface is, for example, a common public radio interface (Common Public Radio Interface, CPRI).

Specifically, the device 1900 in this embodiment of this application further includes an instruction or a program stored in the memory 1905 and executable on the processor 1904. The processor 1904 invokes the instruction or the program stored in the memory 1905 to perform the method performed by each module shown in FIG. 15, and a same technical effect is achieved. To avoid repetition, details are not described herein again.

The radio frequency apparatus 1902 is configured to acquire fourth information; and perform an attach operation or a registration operation in the satellite communication-based store-and-forward communication mode according to the fourth information.

The fourth information includes at least one of the following:
second indication information, the second indication information being used for indicating that a terminal uses the satellite communication-based store-and-forward communication mode; and
second local configuration information, the second local configuration information indicating that the access network device is in the satellite communication-based store-and-forward communication mode.

Optionally, the second indication information is carried in a radio resource control RRC message transmitted to a radio access network RAN.

Optionally, the performing an attach operation or a registration operation in the satellite communication-based store-and-forward communication mode includes at least one of the following:
suspending a third non-access stratum NAS message in a case that a service link is not available, the third NAS message including at least one of the following: an attach request of the terminal, a registration request of the terminal, an authentication response of the terminal, a security command reply, a security command, an authentication request, an attach accept message, and a registration accept message;
forwarding a fourth NAS message to a first core network device in a case that the service link is available, the fourth NAS message including at least one of the following: an attach request of the terminal, a registration request of the terminal, an authentication recovery of the terminal, a security command reply, an attach complete message, and a registration complete message; and
transmitting, to the terminal in a case that the service link is available and a feeder link is not available, at least one of the following:
   a satellite period;
   a time or time window for next access of the terminal;
   cell information for next access of the terminal;
   an indication that an attach request, a registration request, or NAS signaling is suspended;
   a registration recovery indication; and
   a NAS signaling or procedure suspend recovery indication.

Optionally, the radio frequency apparatus 1902 is further configured to:
forward a fifth NAS message to the terminal in a case that the service link is available, an RRC connection is resumed, or a non-access stratum NAS connection resume indication from the terminal is received, the fifth NAS message including at least one of the following: an authentication request transmitted by the first core network device to the terminal, a security command transmitted by the first core network device to the terminal, an attach accept message, and a registration accept message.

Optionally, the radio frequency apparatus 1902 is further configured to:
select, by the access network device, a first core network element that supports the satellite communication-based store-and-forward communication mode.

Optionally, the radio frequency apparatus 1902 is further configured to:
transmit, in a case that the feeder link is available, a satellite period or a second return time to the first core network element, the second return time being a time when the access network device next returns to access the first core network element.

The foregoing device can improve communication performance of the terminal.

It may be understood that for the implementation processes of all implementations mentioned in this embodiment, refer to the related descriptions in the foregoing method embodiments, and a same or corresponding technical effect is achieved. To avoid repetition, details are not described herein again.

An embodiment of this application further provides a readable storage medium. The readable storage medium stores a program or an instruction. The processes in the embodiment of the NTN communication method are implemented when the program or the instruction is executed by a processor, and a same technical effect can be achieved. To avoid repetition, details are not described herein again.

The processor is the processor in the terminal in the foregoing embodiments. The readable storage medium includes a computer-readable storage medium, for example, a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface. The communication interface is coupled to the processor. The processor is configured to run a program or an instruction, to implement the processes in the embodiment of the NTN communication method, and a same technical effect can be achieved. To avoid repetition, details are not described herein again.

It should be understood that the chip mentioned in this embodiment of this application may alternatively be referred to as a system-level chip, a system chip, a chip system, or a system-on-chip.

An embodiment of this application further provides a computer program/program product. The computer program/program product is stored in a storage medium. The computer program/program product is executed by at least one processor to implement the processes in the embodiment of the NTN communication method, and a same technical effect can be achieved. To avoid repetition, details are not described herein again.

An embodiment of this application further provides a wireless communication system, including: a terminal, an access network device, and a first core network element. The terminal may be configured to perform steps of the NTN communication method on the side of the terminal according to the embodiments of this application, the first access network device may be configured to perform steps of the NTN communication method on the side of the first access network device according to the embodiments of this application, and the first core network element may be configured to perform steps of the NTN communication method on the side of the first core network element according to the embodiments of this application.

It should be noted that the terms "include", "comprise", or any other variations thereof in this specification are intended to cover a non-exclusive inclusion, so that a process, a method, an article, or an apparatus that includes a list of elements includes those elements, and also includes other elements which are not expressly listed, or further includes elements inherent to this process, method, article, or apparatus. An element preceded by a statement "includes a ..." does not, without more constraints, preclude the presence of additional identical elements in the process, method, article, or apparatus that includes the element. In addition, it should be noted that the scope of the method and apparatus in the implementations of this application is not limited to performing functions in an order shown or discussed, and may further include performing functions in a basically simultaneous manner or in a reverse order according to the functions involved. For example, the described method may be performed in an order different from the described order, and various steps may be added, omitted, or combined. In addition, features described in combination with some examples may be combined in another example.

According to the descriptions of the foregoing implementations, a person skilled in the art may clearly understand that the method in the foregoing embodiments may be implemented by using a computer software product and a necessary universal hardware platform, or may certainly be implemented by using hardware. The computer software product is stored in a storage medium (for example, a ROM, a RAM, a magnetic disk, or an optical disc), and includes several instructions, to enable a terminal or a network-side device to perform the methods described in the embodiments of this application.

The foregoing describes the embodiments of this application with reference to the accompanying drawings. However, this application is not limited to the foregoing specific implementations. The foregoing specific implementations are merely illustrative and not restrictive. Inspired by this application, a person of ordinary skill in the art may further make implementations in many forms without departing from the purposes of this application and the protection scope of the claims, and all the implementations fall within the protection of this application.

## Claims

1. A non-terrestrial network NTN communication method, comprising:
acquiring, by a terminal, first information, wherein the first information comprises at least one of the following: a network supporting a satellite communication-based store-and-forward communication mode; and the network performing the satellite communication-based store-and-forward communication mode; and
performing, by the terminal, a first operation in the satellite communication-based store-and-forward communication mode according to the first information, the first operation comprising an attach operation or a registration operation.

2. The method according to claim 1, wherein the attach operation comprises:
transmitting a first-type attach request message, attach of the first-type attach request message being of an attach type of the satellite communication-based store-and-forward communication mode; and
the registration operation comprises:
transmitting a first-type registration request message, registration of the first-type registration request message being of a registration type of the satellite communication-based store-and-forward communication mode.

3. The method according to claim 2, wherein the first operation further comprises:
transmitting first indication information; and
transmitting second indication information;
wherein the first indication information is carried in the attach request message or the registration request message, and the first indication information is used for indicating at least one of the following:
indicating use of the satellite communication-based store-and-forward communication mode; and
indicating a capability of supporting the satellite communication-based store-and-forward communication mode; and
the second indication information is carried in a radio resource control RRC message transmitted to a RAN, and is used for indicating that the terminal uses the satellite communication-based store-and-forward communication mode.

4. The method according to any one of claims 1 to 3, wherein the method further comprises:
receiving, by the terminal, second information transmitted by a network side, the second information comprising at least one of the following:
a satellite period;
a time or time window for next access of the terminal;
cell information for next access of the terminal;
an indication that an attach request, a registration request, or non-access stratum NAS signaling is suspended;
a valid duration for attach or registration recovery of the terminal;
a registration recovery indication; and
a NAS signaling or procedure suspend recovery indication.

5. The method according to any one of claims 1 to 4, wherein the method further comprises:
initiating an attach or registration recovery procedure in a case that one satellite period is met, the time or time window for next access of the terminal is reached, a cell for next access of the terminal is matched, a registration recovery indication is received, a NAS signaling or procedure suspend recovery indication is received, or a service link is detected to be available.

6. The method according to claim 5, wherein the initiating an attach or registration recovery procedure comprises at least one of the following:
initiating an RRC connection establishment or connection resume procedure; and
transmitting an attach suspend recovery request, a registration suspend recovery request, an RRC signaling suspend recovery indication, or a NAS signaling suspend recovery indication.

7. The method according to claim 5 or 6, wherein the initiating an attach or registration recovery procedure in a case that one satellite period is met, the time or time window for next access of the terminal is reached, a cell for next access of the terminal is matched, a registration recovery indication is received, a NAS signaling or procedure suspend recovery indication is received, or a service link is detected to be available comprises:
initiating the attach or registration recovery procedure in a case that one satellite period is met, the time or time window for next access of the terminal is reached, the cell for next access of the terminal is matched, the registration recovery indication is received, the NAS signaling or procedure suspend recovery indication is received, or the service link is detected to be available and the terminal is within the valid duration for attach or registration recovery.

8. A non-terrestrial network NTN communication method, comprising:
acquiring, by a first core network element, third information; and
performing, by the first core network element, an attach operation or a registration operation in a satellite communication-based store-and-forward communication mode according to the third information.

9. The method according to claim 8, wherein the third information comprises at least one of the following:
indication information, the indication information being used for indicating at least one of the following: use of the satellite communication-based store-and-forward communication mode; a capability of supporting the satellite communication-based store-and-forward communication mode; and access of a terminal by using the satellite communication-based store-and-forward communication mode;
a satellite period;
a first return time, the first return time being a time when an access network device on a satellite next returns to access the first core network element;
a first-type attach request message, attach of the first-type attach request message being of an attach type of the satellite communication-based store-and-forward communication mode; and
a first-type registration request message, registration of the first-type registration request message being of a registration type of the satellite communication-based store-and-forward communication mode; and
first local configuration information, the first local configuration information indicating that access of the terminal is access by using the satellite communication-based store-and-forward communication mode.

10. The method according to claim 9, wherein the indication information comprises at least one of the following:
first indication information, and third indication information;
wherein the first indication information is carried in an attach request message or a registration request message, and is used for indicating at least one of the following: indicating use of the satellite communication-based store-and-forward communication mode; and
indicating a capability of supporting the satellite communication-based store-and-forward communication mode; and
the third indication information is used for indicating access of the terminal by using the satellite communication-based store-and-forward communication mode.

11. The method according to any one of claims 8 to 10, wherein the performing an attach operation or a registration operation in a satellite communication-based store-and-forward communication mode comprises:
suspending an attach or registration procedure of a terminal or suspending a session establishment procedure of the terminal in a case that a service link is available and a feeder link is not available.

12. The method according to claim 11, wherein the method further comprises at least one of the following:
transmitting at least one of the following to the terminal: a satellite period; a time or time window for next access of the terminal; cell information for next access of the terminal; an indication that an attach request, a registration request, or non-access stratum NAS signaling is suspended; a valid duration for attach or registration recovery of the terminal;
resuming the suspended attach or registration procedure in a case that the feeder link is available, the resuming the suspended attach or registration procedure comprising at least one of the following: authentication of the terminal, acquisition of encryption information, and a session establishment procedure;
resuming the suspended attach or registration procedure in a case that the feeder link is available or the first return time is reached, the resuming the suspended attach or registration procedure comprising transmitting a first non-access stratum NAS message to a radio access network RAN, the first NAS message comprising at least one of the following: an authentication request of the terminal, a security command, an attach accept message, and a registration accept message;
transmitting, in a case that the service link is available or an attach or registration recovery indication from the terminal is received, a second NAS message to the terminal, the second NAS message comprising at least one of the following: an authentication request of the terminal, a security command, an attach accept message, and a registration accept message; and
transmitting a registration recovery indication or transmitting a NAS signaling or procedure suspend recovery indication to the terminal in a case that the service link is available.

13. A non-terrestrial network NTN communication method, comprising:
acquiring, by an access network device, fourth information; and
performing, by the access network device, an attach operation or a registration operation in a satellite communication-based store-and-forward communication mode according to the fourth information;
wherein the fourth information comprises at least one of the following:
second indication information, the second indication information being used for indicating that a terminal uses the satellite communication-based store-and-forward communication mode; and
second local configuration information, the second local configuration information indicating that the access network device is in the satellite communication-based store-and-forward communication mode.

14. The method according to claim 13, wherein the second indication information is carried in a radio resource control RRC message transmitted to a radio access network RAN.

15. The method according to claim 13, wherein the performing an attach operation or a registration operation in a satellite communication-based store-and-forward communication mode comprises at least one of the following:
suspending a third non-access stratum NAS message in a case that a service link is not available, the third NAS message comprising at least one of the following: an attach request of the terminal, a registration request of the terminal, an authentication response of the terminal, a security command reply, a security command, an authentication request, an attach accept message, and a registration accept message;
forwarding a fourth NAS message to a first core network device in a case that the service link is available, the fourth NAS message comprising at least one of the following: an attach request of the terminal, a registration request of the terminal, an authentication recovery of the terminal, a security command reply, an attach complete message, and a registration complete message; and
transmitting, to the terminal in a case that the service link is available and a feeder link is not available, at least one of the following:
a satellite period;
a time or time window for next access of the terminal;
cell information for next access of the terminal;
an indication that an attach request, a registration request, or NAS signaling is suspended;
a registration recovery indication; and
a NAS signaling or procedure suspend recovery indication.

16. The method according to any one of claims 13 to 15, wherein the method further comprises:
forwarding a fifth NAS message to the terminal in a case that the service link is available, an RRC connection is resumed, or a non-access stratum NAS connection resume indication from the terminal is received, the fifth NAS message comprising at least one of the following: an authentication request transmitted by the first core network device to the terminal, a security command transmitted by the first core network device to the terminal, an attach accept message, and a registration accept message.

17. The method according to any one of claims 13 to 16, wherein the method further comprises:
selecting, by the access network device, a first core network element that supports the satellite communication-based store-and-forward communication mode.

18. The method according to any one of claims 13 to 17, wherein the method further comprises:
transmitting, in a case that the feeder link is available, a satellite period or a second return time to the first core network element, the second return time being a time when the access network device next returns to access the first core network element.

19. A non-terrestrial network NTN communication apparatus, comprising:
an acquisition module, configured to acquire first information, wherein the first information comprises at least one of the following: a network supporting a satellite communication-based store-and-forward communication mode; and the network performing the satellite communication-based store-and-forward communication mode; and
an execution module, configured to perform a first operation in the satellite communication-based store-and-forward communication mode according to the first information, the first operation comprising an attach operation or a registration operation.

20. The apparatus according to claim 19, wherein the attach operation comprises:
transmitting a first-type attach request message, attach of the first-type attach request message being of an attach type of the satellite communication-based store-and-forward communication mode; and
the registration operation comprises:
transmitting a first-type registration request message, registration of the first-type registration request message being of a registration type of the satellite communication-based store-and-forward communication mode.

21. The apparatus according to claim 19 or 20, wherein the apparatus further comprises:
a receiving module, configured to receive second information transmitted by a network side, the second information comprising at least one of the following:
a satellite period;
a time or time window for next access of a terminal;
cell information for next access of the terminal;
an indication that an attach request, a registration request, or non-access stratum NAS signaling is suspended;
a valid duration for attach or registration recovery of the terminal;
a registration recovery indication; and
a NAS signaling or procedure suspend recovery indication.

22. The apparatus according to any one of claims 19 to 21, wherein the apparatus further comprises:
an initiation module, configured to initiate an attach or registration recovery procedure in a case that one satellite period is met, the time or time window for next access of the terminal is reached, a cell for next access of the terminal is matched, a registration recovery indication is received, a NAS signaling or procedure suspend recovery indication is received, or a service link is detected to be available.

23. A non-terrestrial network NTN communication apparatus, comprising:
an acquisition module, configured to acquire third information; and
an execution module, configured to perform an attach operation or a registration operation in the satellite communication-based store-and-forward communication mode according to the third information.

24. The apparatus according to claim 23, wherein the performing an attach operation or a registration operation in a satellite communication-based store-and-forward communication mode comprises:
suspending an attach or registration procedure of a terminal or suspending a session establishment procedure of the terminal in a case that a service link is available and a feeder link is not available.

25. The apparatus according to claim 24, wherein the apparatus further comprises at least one of the following:
a first transmission module, configured to transmit at least one of the following to the terminal: a satellite period; a time or time window for next access of the terminal; cell information for next access of the terminal; an indication that an attach request, a registration request, or non-access stratum NAS signaling is suspended; a valid duration for attach or registration recovery of the terminal;
a first recovery module, configured to resume the suspended attach or registration procedure in a case that the feeder link is available, the resuming the suspended attach or registration procedure comprising at least one of the following: authentication of the terminal, acquisition of encryption information, and a session establishment procedure;
a second recovery module, configured to resume the suspended attach or registration procedure in a case that the feeder link is available or the first return time is reached, the resuming the suspended attach or registration procedure comprising transmitting a first non-access stratum NAS message to a radio access network RAN, the first NAS message comprising at least one of the following: an authentication request of the terminal, a security command, an attach accept message, and a registration accept message;
a second transmission module, configured to transmit, in a case that the service link is available or an attach recovery indication from the terminal is received, a second NAS message to the terminal, the second NAS message comprising at least one of the following: an authentication request of the terminal, a security command, an attach accept message, and a registration accept message; and
a third transmission module, configured to transmit a registration recovery indication or transmit a NAS signaling or procedure suspend recovery indication to the terminal in a case that the service link is available.

26. A non-terrestrial network NTN communication apparatus, comprising:
an acquisition module, configured to acquire fourth information; and
an execution module, configured to perform an attach operation or a registration operation in the satellite communication-based store-and-forward communication mode according to the fourth information;
wherein the fourth information comprises at least one of the following:
second indication information, the second indication information being used for indicating that a terminal uses the satellite communication-based store-and-forward communication mode; and
second local configuration information, the second local configuration information indicating that an access network device is in the satellite communication-based store-and-forward communication mode.

27. The apparatus according to claim 26, wherein the performing an attach operation or a registration operation in a satellite communication-based store-and-forward communication mode comprises at least one of the following:
suspending a third non-access stratum NAS message in a case that a service link is not available, the third NAS message comprising at least one of the following: an attach request of the terminal, a registration request of the terminal, an authentication response of the terminal, a security command reply, a security command, an authentication request, an attach accept message, and a registration accept message;
forwarding a fourth NAS message to a first core network device in a case that the service link is available, the fourth NAS message comprising at least one of the following: an attach request of the terminal, a registration request of the terminal, an authentication recovery of the terminal, a security command reply, an attach complete message, and a registration complete message; and
transmitting, to the terminal in a case that the service link is available and a feeder link is not available, at least one of the following:
a satellite period;
a time or time window for next access of the terminal;
cell information for next access of the terminal;
an indication that an attach request, a registration request, or NAS signaling is suspended;
a registration recovery indication; and
a NAS signaling or procedure suspend recovery indication.

28. The apparatus according to claim 26 or 27, wherein the apparatus further comprises:
a forwarding module, configured to forward a fifth non-access stratum NAS message to the terminal in a case that the service link is available, an RRC connection is resumed, or a NAS connection resume indication from the terminal is received, the fifth NAS message comprising at least one of the following: an authentication request transmitted by the first core network device to the terminal, a security command transmitted by the first core network device to the terminal, an attach accept message, and a registration accept message.

29. The apparatus according to any one of claims 26 to 28, wherein the apparatus further comprises:
a selection module, configured to select a first core network element that supports the satellite communication-based store-and-forward communication mode.

30. The apparatus according to any one of claims 26 to 29, wherein the apparatus further comprises:
a transmission module, configured to transmit, in a case that the feeder link is available, a satellite period or a second return time to the first core network element, the second return time being a time when the access network device next returns to access the first core network element.

31. A terminal, comprising a processor and a memory, the memory storing a program or an instruction executable on the processor, and when the program or the instruction is executed by the processor, steps of the non-terrestrial network NTN communication method according to any one of claims 1 to 7 being implemented.

32. A network-side device, comprising a processor and a memory, the memory storing a program or an instruction executable on the processor, and when the program or the instruction is executed by the processor, steps of the non-terrestrial network NTN communication method according to any one of claims 8 to 12 being implemented, or when the program or the instruction is executed by the processor, steps of the non-terrestrial network NTN communication method according to any one of claims 13 to 18 being implemented.

33. A readable storage medium, the readable storage medium having a program or an instruction stored therein, and when the program or the instruction is executed by a processor, steps of the non-terrestrial network NTN communication method according to any one of claims 1 to 7 being implemented, or steps of the non-terrestrial network NTN communication method according to any one of claims 8 to 12 being implemented, or steps of the non-terrestrial network NTN communication method according to any one of claims 13 to 18 being implemented.
